# EUROPEAN PATENT APPLICATION

(11) **EP 4 598 211 A1**
(43) Date of publication of application: **06.08.2025**
(21) Application number: 23870305.2
(22) Date of filing: 12.09.2023
(51) Int. Cl.: H04W 72/23

(54) **DOWNLINK BEAM PREDICTION METHOD AND APPARATUS, DEVICE, AND STORAGE MEDIUM**

(30) Priority: 30.09.2022 CN 202211215784
(71) Applicant: Datang Mobile Communications Equipment Co., Ltd., Beijing 100085 (CN)
(72) Inventor: WANG, Da, Beijing 100085 (CN); GAO, Qiubin, Beijing 100085 (CN); HUANG, Qiuping, Beijing 100085 (CN)
(74) Representative: Ipsilon
(86) International application number: PCT/CN2023/118271
(87) International publication number: WO 2024/067067

(57) **Abstract**

Embodiments of the present disclosure provide a downlink beam prediction method and apparatus, a device, and a storage medium. The method comprises: a first communication apparatus receiving first information, the first information comprising one or more of a data set, a reference signal (RS) configuration, and beam description information; on the basis of the first information, training or updating an artificial intelligence or machine learning (AI/ML) model used for downlink beam prediction; and predicting one or more target downlink beams on the basis of the trained or updated AI/ML model, the target downlink beams being used for information transmission between the first communication apparatus and a second communication apparatus.

## Description

### CROSS-REFERENCES TO RELATED APPLICATIONS

The present application claims priority to Chinese patent application No. 202211215784.0 filed on September 30, 2022, entitled "Downlink Beam Prediction Method and Apparatus, Device, and Storage Medium", which is hereby incorporated by reference in its entirety.

### FIELD

The present application relates to the field of radio communication, and in particular, to methods and apparatuses for downlink beam prediction, devices and a storage medium.

### BACKGROUND

In a new radio (NR) downlink beam management scenario, a way for determining the best downlink beam requires that a base station cyclically transmits a transmission (Tx) beam in different directions, and a user equipment (UE) uses a reception (Rx) beam to receive the Tx beam and measures channel state information reference signals (CSI-RSs) or synchronization signal block (SSB) signals transmitted on all Tx beams, and selects a beam with the best reception performance (such as reference signal received power (RSRP)) for the base station to use the downlink beam to transmit subsequently information to the UE.

In implementation schemes of the related art, CSI-RS or SSB signal needs to be transmitted on all Tx beams, which consumes a lot of resources. In addition, the UE needs to measure the CSI-RSs or SSB signals transmitted on all Tx beams respectively, resulting in a complex implementation for the UE and a large measurement overhead.

### BRIEF SUMMARY

In view of the problems in the related art, embodiments of the present application provide methods and apparatuses for downlink beam prediction, devices and a storage medium.

An embodiment of the present application provides a method for downlink beam prediction, performed by a first communication device, including:
receiving first information, where the first information contains one or more of a dataset, a reference signal (RS) configuration, or beam description information;
training or updating an artificial intelligence (AI) or machine learning (ML) model for downlink beam prediction based on the first information; and
predicting one or more target downlink beams based on a trained or updated AI/ML model, where the target downlink beams are used for information transmission between the first communication device and a second communication device.

In an embodiment, receiving the first information contains:
receiving the first information transmitted from the second communication device.

In an embodiment, the dataset contains one or more of the following:
a dataset identification; or
one or more dataset samples, where the dataset samples contain multiple beam identifications, an RS measurement result of a beam corresponding to each beam identification, and one or more beam identifications as prediction labels.

In an embodiment, the RS configuration contains one or more of the following:
an RS configuration identification;
a first RS configuration belonging to a measurement set;
a second RS configuration belonging to a prediction set; or
a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the beam description information contains one or more of the following:
a beam identification;
an RS identification;
network device antenna configuration information;
beam angle information; or
beam width information.

In an embodiment, the first information is associated with one or more of an application scenario, a network device configuration, or a model function.

In an embodiment, after predicting the one or more target downlink beams, the method further includes:
transmitting second information to the second communication device, where the second information contains one or more of the following:
a beam identification corresponding to the target downlink beam;
an RS identification corresponding to the target downlink beam;
an identification of the AI/ML model used to predict the target downlink beam;
identifications of datasets used to predict the target downlink beam;
identifications of RS configurations used to predict the target downlink beam;
an identification of beam description information used to predict the target downlink beam; or
information on a quantity of input beams and a quantity of output beams for the AI/ML model used to predict the target downlink beam.

An embodiment of the present application further provides a method for downlink beam prediction, performed by a second communication device, including:
determining first information, where the first information contains one or more of a dataset, a reference signal (RS) configuration, or beam description information, the first information is used to train or update an artificial intelligence (AI) or machine learning (ML) model, the AI/ML model is used to predict one or more target downlink beams, and the target downlink beams are used for information transmission between the second communication device and a first communication device; and
transmitting the first information to the first communication device.

In an embodiment, the dataset contains one or more of the following:
a dataset identification; or
one or more dataset samples, where the dataset samples contain multiple beam identifications, an RS measurement result of a beam corresponding to each beam identification, and one or more beam identifications as prediction labels.

In an embodiment, the RS configuration contains one or more of the following:
an RS configuration identification;
a first RS configuration belonging to a measurement set;
a second RS configuration belonging to a prediction set; or
a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the beam description information contains one or more of the following:
a beam identification;
an RS identification;
network device antenna configuration information;
beam angle information; or
beam width information.

In an embodiment, the first information is associated with one or more of an application scenario, a network device configuration, or a model function.

In an embodiment, the method further includes:
receiving second information transmitted from the first communication device; and
determining the target downlink beam for information transmission with the first communication device based on the second information and a mapping relationship between a beam identification and a physical beam;
where the second information contains one or more of the following:
   a beam identification corresponding to the target downlink beam;
   an RS identification corresponding to the target downlink beam;
   an identification of the AI/ML model used to predict the target downlink beam;
   identifications of datasets used to predict the target downlink beam;
   identifications of RS configurations used to predict the target downlink beam;
   an identification of beam description information used to predict the target downlink beam; or
   information on a quantity of input beams and a quantity of output beams for the AI/ML model used to predict the target downlink beam.

An embodiment of the present application further provides a method for downlink beam prediction, performed by a user equipment (UE), including:
receiving a reference signal (RS) configuration transmitted from a network device;
training or updating an artificial intelligence (AI) or machine learning (ML) model for downlink beam prediction based on the RS configuration; and
predicting one or more target downlink beams based on a trained or updated AI/ML model, where the target downlink beams are used for information transmission between the network device and the UE.

In an embodiment, the RS configuration contains an RS configuration identification, a second RS configuration belonging to a prediction set, and a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, after predicting the one or more target downlink beams, the method further includes:
transmitting second information to the network device, where the second information contains one or more of the following:
a beam identification corresponding to the target downlink beam;
an RS identification corresponding to the target downlink beam;
an identification of the AI/ML model used to predict the target downlink beam;
identifications of RS configurations used to predict the target downlink beam; or
information on a quantity of input beams and a quantity of output beams for the AI/ML model used to predict the target downlink beam.

An embodiment of the present application further provides a method for downlink beam prediction, performed by a network device, including:
determining a reference signal (RS) configuration, where the RS configuration is used to train or update an artificial intelligence (AI) or machine learning (ML) model, the AI/ML model is used to predict one or more target downlink beams, and the target downlink beams are used for information transmission between the network device and a user equipment (UE); and
transmitting the RS configuration to the UE.

In an embodiment, the RS configuration contains an RS configuration identification, a second RS configuration belonging to a prediction set, and a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the method further includes:
receiving second information transmitted from the UE; and
determining the target downlink beam for information transmission with the UE based on the second information and a mapping relationship between a beam identification and a physical beam;
where the second information contains one or more of the following:
   a beam identification corresponding to the target downlink beam;
   an RS identification corresponding to the target downlink beam;
   an identification of the AI/ML model used to predict the target downlink beam;
   identifications of RS configurations used to predict the target downlink beam; or
   information on a quantity of input beams and a quantity of output beams for the AI/ML model used to predict the target downlink beam.

An embodiment of the present application further provides a first communication device, including a memory, a transceiver, and a processor,
where the memory is used for storing a computer program, the transceiver is used for receiving and transmitting data under control of the processor and the processor is used for reading the computer program in the memory and performing the following operations:
receiving first information, where the first information contains one or more of a dataset, a reference signal (RS) configuration, or beam description information;
training or updating an artificial intelligence (AI) or machine learning (ML) model for downlink beam prediction based on the first information; and
predicting one or more target downlink beams based on a trained or updated AI/ML model, where the target downlink beams are used for information transmission between the first communication device and a second communication device.

In an embodiment, receiving the first information contains:
receiving the first information transmitted from the second communication device.

In an embodiment, the dataset contains one or more of the following:
a dataset identification; or
one or more dataset samples, where the dataset samples contain multiple beam identifications, an RS measurement result of a beam corresponding to each beam identification, and one or more beam identifications as prediction labels.

In an embodiment, the RS configuration contains one or more of the following:
an RS configuration identification;
a first RS configuration belonging to a measurement set;
a second RS configuration belonging to a prediction set; or
a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the beam description information contains one or more of the following:
a beam identification;
an RS identification;
network device antenna configuration information;
beam angle information; or
beam width information.

In an embodiment, the first information is associated with one or more of an application scenario, a network device configuration, or a model function.

In an embodiment, after predicting one or more target downlink beams, the operations further include:
transmitting second information to the second communication device, where the second information contains one or more of the following:
a beam identification corresponding to the target downlink beam;
an RS identification corresponding to the target downlink beam;
an identification of the AI/ML model used to predict the target downlink beam;
identifications of datasets used to predict the target downlink beam;
identifications of RS configurations used to predict the target downlink beam;
an identification of beam description information used to predict the target downlink beam; or
information on a quantity of input beams and a quantity of output beams for the AI/ML model used to predict the target downlink beam.

An embodiment of the present application further provides a second communication device, including a memory, a transceiver, and a processor,
where the memory is used for storing a computer program, the transceiver is used for receiving and transmitting data under control of the processor and the processor is used for reading the computer program in the memory and performing the following operations:
determining first information, where the first information contains one or more of a dataset, a reference signal (RS) configuration, or beam description information, the first information is used to train or update an artificial intelligence (AI) or machine learning (ML) model, the AI/ML model is used to predict one or more target downlink beams, and the target downlink beams are used for information transmission between the second communication device and a first communication device; and
transmitting the first information to the first communication device.

In an embodiment, the dataset contains one or more of the following:
a dataset identification; or
one or more dataset samples, where the dataset samples contain multiple beam identifications, an RS measurement result of a beam corresponding to each beam identification, and one or more beam identifications as prediction labels.

In an embodiment, the RS configuration contains one or more of the following:
an RS configuration identification;
a first RS configuration belonging to a measurement set;
a second RS configuration belonging to a prediction set; or
a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the beam description information contains one or more of the following:
a beam identification;
an RS identification;
network device antenna configuration information;
beam angle information; or
beam width information.

In an embodiment, the first information is associated with one or more of an application scenario, a network device configuration, or a model function.

In an embodiment, the operations further include:
receiving second information transmitted from the first communication device; and
determining the target downlink beam for information transmission with the first communication device based on the second information and a mapping relationship between a beam identification and a physical beam;
where the second information contains one or more of the following:
   a beam identification corresponding to the target downlink beam;
   an RS identification corresponding to the target downlink beam;
   an identification of the AI/ML model used to predict the target downlink beam;
   identifications of datasets used to predict the target downlink beam;
   identifications of RS configurations used to predict the target downlink beam;
   an identification of beam description information used to predict the target downlink beam; or
   information on a quantity of input beams and a quantity of output beams for the AI/ML model used to predict the target downlink beam.
An embodiment of the present application further provides a user equipment (UE), including a memory, a transceiver and a processor, where
   where the memory is used for storing a computer program, the transceiver is used for receiving and transmitting data under control of the processor and the processor is used for reading the computer program in the memory and performing the following operations:
   receiving a reference signal (RS) configuration transmitted from a network device;
   training or updating an artificial intelligence (AI) or machine learning (ML) model for downlink beam prediction based on the RS configuration; and
   predicting one or more target downlink beams based on a trained or updated AI/ML model, where the target downlink beams are used for information transmission between the network device and the UE.

In an embodiment, the RS configuration contains an RS configuration identification, a second RS configuration belonging to a prediction set, and a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, after predicting one or more target downlink beams, the operations further include:
transmitting second information to the network device, where the second information contains one or more of the following:
a beam identification corresponding to the target downlink beam;
an RS identification corresponding to the target downlink beam;
an identification of the AI/ML model used to predict the target downlink beam;
identifications of RS configurations used to predict the target downlink beam; or
information on a quantity of input beams and a quantity of output beams for the AI/ML model used to predict the target downlink beam.

An embodiment of the present application further provides a network device, including a memory, a transceiver and a processor, where
where the memory is used for storing a computer program, the transceiver is used for receiving and transmitting data under control of the processor and the processor is used for reading the computer program in the memory and performing the following operations:
determining a reference signal (RS) configuration, where the RS configuration is used to train or update an artificial intelligence (AI) or machine learning (ML) model, the AI/ML model is used to predict one or more target downlink beams, and the target downlink beams are used for information transmission between the network device and a user equipment (UE); and
transmitting the RS configuration to the UE.

In an embodiment, the RS configuration contains an RS configuration identification, a second RS configuration belonging to a prediction set, and a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the operations further include:
receiving second information transmitted from the UE; and
determining the target downlink beam for information transmission with the UE based on the second information and a mapping relationship between a beam identification and a physical beam;
where the second information contains one or more of the following:
   a beam identification corresponding to the target downlink beam;
   an RS identification corresponding to the target downlink beam;
   an identification of the AI/ML model used to predict the target downlink beam;
   identifications of RS configurations used to predict the target downlink beam; or
   information on a quantity of input beams and a quantity of output beams for the AI/ML model used to predict the target downlink beam.

An embodiment of the present application further provides an apparatus for downlink beam prediction, for use in a first communication device, including:
a first receiving unit, used for receiving first information, where the first information contains one or more of a dataset, a reference signal (RS) configuration, or beam description information;
a first model unit, used for training or updating an artificial intelligence (AI) or machine learning (ML) model for downlink beam prediction based on the first information; and
a first predicting unit, used for predicting one or more target downlink beams based on a trained or updated AI/ML model, where the target downlink beams are used for information transmission between the first communication device and a second communication device.

In an embodiment, receiving the first information contains:
receiving the first information transmitted from the second communication device.

In an embodiment, the dataset contains one or more of the following:
a dataset identification; or
one or more dataset samples, where the dataset samples contain multiple beam identifications, an RS measurement result of a beam corresponding to each beam identification, and one or more beam identifications as prediction labels.

In an embodiment, the RS configuration contains one or more of the following:
an RS configuration identification;
a first RS configuration belonging to a measurement set;
a second RS configuration belonging to a prediction set; or
a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the beam description information contains one or more of the following:
a beam identification;
an RS identification;
network device antenna configuration information;
beam angle information; or
beam width information.

In an embodiment, the first information is associated with one or more of an application scenario, a network device configuration, or a model function.

In an embodiment, after predicting one or more target downlink beams, the apparatus further includes:
a first transmitting unit, used for transmitting second information to the second communication device, where the second information contains one or more of the following:
a beam identification corresponding to the target downlink beam;
an RS identification corresponding to the target downlink beam;
an identification of the AI/ML model used to predict the target downlink beam;
identifications of datasets used to predict the target downlink beam;
identifications of RS configurations used to predict the target downlink beam;
an identification of beam description information used to predict the target downlink beam; or
information on a quantity of input beams and a quantity of output beams for the AI/ML model used to predict the target downlink beam.

An embodiment of the present application further provides an apparatus for downlink beam prediction, for use in a second communication device, including:
a first determining unit, used for determining first information, where the first information contains one or more of a dataset, a reference signal (RS) configuration, or beam description information, the first information is used to train or update an artificial intelligence (AI) or machine learning (ML) model, the AI/ML model is used to predict one or more target downlink beams, and the target downlink beams are used for information transmission between the second communication device and a first communication device; and
a second transmitting unit, used for transmitting the first information to the first communication device.

In an embodiment, the dataset contains one or more of the following:
a dataset identification; or
one or more dataset samples, where the dataset samples contain multiple beam identifications, an RS measurement result of a beam corresponding to each beam identification, and one or more beam identifications as prediction labels.

In an embodiment, the RS configuration contains one or more of the following:
an RS configuration identification;
a first RS configuration belonging to a measurement set;
a second RS configuration belonging to a prediction set; or
a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the beam description information contains one or more of the following:
a beam identification;
an RS identification;
network device antenna configuration information;
beam angle information; or
beam width information.

In an embodiment, the first information is associated with one or more of an application scenario, a network device configuration, or a model function.

In an embodiment, the apparatus further includes:
a second receiving unit, used for receiving second information transmitted from the first communication device; and
determining the target downlink beam for information transmission with the first communication device based on the second information and a mapping relationship between a beam identification and a physical beam;
where the second information contains one or more of the following:
   a beam identification corresponding to the target downlink beam;
   an RS identification corresponding to the target downlink beam;
   an identification of the AI/ML model used to predict the target downlink beam;
   identifications of datasets used to predict the target downlink beam;
   identifications of RS configurations used to predict the target downlink beam;
   an identification of beam description information used to predict the target downlink beam; or
   information on a quantity of input beams and a quantity of output beams for the AI/ML model used to predict the target downlink beam.

An embodiment of the present application further provides an apparatus for downlink beam prediction, for use in a user equipment (UE), including:
a third receiving unit, used for receiving a reference signal (RS) configuration transmitted from a network device;
a second model unit, used for training or updating an artificial intelligence (AI) or machine learning (ML) model for downlink beam prediction based on the RS configuration; and
a second predicting unit, used for predicting one or more target downlink beams based on a trained or updated AI/ML model, where the target downlink beams are used for information transmission between the network device and the UE.

In an embodiment, the RS configuration contains an RS configuration identification, a second RS configuration belonging to a prediction set, and a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, after predicting one or more target downlink beams, the apparatus further includes:
a third transmitting unit, used for transmitting second information to the network device, where the second information contains one or more of the following:
a beam identification corresponding to the target downlink beam;
an RS identification corresponding to the target downlink beam;
an identification of the AI/ML model used to predict the target downlink beam;
identifications of RS configurations used to predict the target downlink beam; or
information on a quantity of input beams and a quantity of output beams for the AI/ML model used to predict the target downlink beam.

An embodiment of the present application further provides an apparatus for downlink beam prediction, for use in a network device, including:
a second determining unit, used for determining a reference signal (RS) configuration, where the RS configuration is used to train or update an artificial intelligence (AI) or machine learning (ML) model, the AI/ML model is used to predict one or more target downlink beams, and the target downlink beams are used for information transmission between the network device and a user equipment (UE); and
a fourth transmitting unit, used for transmitting the RS configuration to the UE.

In an embodiment, the RS configuration contains an RS configuration identification, a second RS configuration belonging to a prediction set, and a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the apparatus further includes:
a fourth receiving unit, used for receiving second information transmitted from the UE; and
determining the target downlink beam for information transmission with the UE based on the second information and a mapping relationship between a beam identification and a physical beam;
where the second information contains one or more of the following:
   a beam identification corresponding to the target downlink beam;
   an RS identification corresponding to the target downlink beam;
   an identification of the AI/ML model used to predict the target downlink beam;
   identifications of RS configurations used to predict the target downlink beam; or
   information on a quantity of input beams and a quantity of output beams for the AI/ML model used to predict the target downlink beam.

An embodiment of the present application further provides a computer-readable storage medium, where the computer-readable storage medium stores a computer program, and the computer program causes a computer to perform any of the methods for downlink beam prediction described above.

An embodiment of the present application further provides a communication device, where the communication device stores a computer program, and the computer program causes a communication device to perform any of the methods for downlink beam prediction described above.

An embodiment of the present application further provides a processor-readable storage medium, where the processor-readable storage medium stores a computer program, and the computer program causes a processor to perform any of the methods for downlink beam prediction described above.

An embodiment of the present application further provides a chip product, where the chip product stores a computer program, and the computer program causes a chip product to perform any of the methods for downlink beam prediction described above.

In the methods and apparatuses for downlink beam prediction, devices and the storage medium provided by the embodiments of the present application, one or more of the dataset, the RS configuration, or the beam description information are transmitted to the first communication device, the first communication device may train or update the AI or ML model for downlink beam prediction based on these information and predict one or more target downlink beams based on the trained or updated AI/ML model, to effectively save RS transmission resources, UE measurement overhead and reduce UE measurement delay.

### BRIEF DESCRIPTION OF THE DRAWINGS

To illustrate solutions in the embodiments of the present application more clearly, the drawings that need to be used in the descriptions of the embodiments are briefly described below. The drawings in the following description are some embodiments of the present application, and other drawings may be obtained based on these drawings without any creative work for those skilled in the related art.
FIG. 1 is a first schematic flowchart of a method for downlink beam prediction according to an embodiment of the present application;
FIG. 2 is a second schematic flowchart of a method for downlink beam prediction according to an embodiment of the present application;
FIG. 3 is a third schematic flowchart of a method for downlink beam prediction according to an embodiment of the present application;
FIG. 4 is a fourth schematic flowchart of a method for downlink beam prediction according to an embodiment of the present application;
FIG. 5 is a schematic structural diagram of a first communication device according to an embodiment of the present application;
FIG. 6 is a schematic structural diagram of a second communication device according to an embodiment of the present application;
FIG. 7 is a schematic structural diagram of a user equipment (UE) according to an embodiment of the present application;
FIG. 8 is a schematic structural diagram of a network device according to an embodiment of the present application;
FIG. 9 is a first schematic structural diagram of an apparatus for downlink beam prediction according to an embodiment of the present application;
FIG. 10 is a second schematic structural diagram of an apparatus for downlink beam prediction according to an embodiment of the present application;
FIG. 11 is a third schematic structural diagram of an apparatus for downlink beam prediction according to an embodiment of the present application; and
FIG. 12 is a fourth schematic structural diagram of an apparatus for downlink beam prediction according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

Some contents associated with the embodiments of the present application are firstly introduced to facilitate a clearer understanding of the solutions of the embodiments of the present application.

### 1. Three ways to calculate the best downlink (DL) beam

One way is to measure reference signal received power (RSRP) for all DL beam pairs (a beam pair consisting of a base station transmission (Tx) beam and a user equipment (UE) reception (Rx) beam) to obtain a beam pair corresponding to the maximum RSRP, that is, the best beam pair, and inform a base station. The base station uses a Tx beam in the best beam pair to transmit information to the UE, and the UE uses a Rx beam in the beam pair to receive the information.

Another way is that the UE fixes or selects a best DL Rx beam, receives the DL Tx beams transmitted from the base station and measures the RSRP for all DL Tx beams transmitted from the base station to obtain a Tx beam corresponding to the maximum RSRP, that is, the best Tx beam, and informs the base station. The base station uses the Tx beam to transmit information to the UE.

Another way is that the base station fixes or selects a best DL Tx beam, and the UE receives the best DL Tx beam transmitted from the base station using all DL Rx beams and measures the corresponding RSRP to obtain a Rx beam corresponding to the maximum RSRP, that is, the best Rx beam. The UE uses the best Rx beam to receive information in case that the base station uses the best Tx beam to transmit the information to the UE.

As mentioned above, for the way of measuring DL beam pair, the UE needs to receive channel state information reference signal (CSI-RS)/synchronization signal block (SSB) on each Tx beam transmitted from the base station for measurement using all Rx beams. For example, there are 4 UE Rx beams and 32 base station Tx beams. If the UE uses all Rx beams to receive each Tx beam respectively, the UE needs to measure 4*32=128 CSI-RS/SSBs, that is, all Tx beams need to be measured for each Rx beam to calculate the best beam pair. For the way of measuring DL Tx beam, the UE fixes or selects the best Rx beam and measures all Tx beams transmitted from the base station. The UE needs to measure 32 Tx beams to obtain the best Tx beam. The same problem exists for the way of measuring DL Rx beam.

It is considered that the above ways need to measure all Rx beams and Tx beams, the reference signals used for measurement occupy a large amount of transmission resources, the UE measurement complexity is high, the measurement consumption is large, and the UE measurement delay is high. The present application provides a method for downlink beam prediction using artificial intelligence (AI) or machine learning (ML) technology. For the way of measuring DL beam pair, only a part of the DL beam pairs needs to be measured. For example, only 8 of 32 Tx beams are transmitted, and the UE only needs to measure the CSI-RS/SSB for 4*8=32 beam pairs to accurately predict the beam pair with the best reception performance among the 128 beam pairs consisting of 32 Tx beams and 4 Rx beams. For the way of measuring DL Tx beam, the UE fixes or selects the best Rx beam and only needs to measure 8 Tx beams to accurately predict the Tx beam with the best reception performance among the 32 Tx beams. The present application may also be used in other scenarios, such as measuring other wide beams that are easy to be measured and are used for transmitting SSB, or measuring beams in other frequency bands to predict a narrow beam that transmits CSI-RS, or predict the best beam in the high-frequency beam. For example, the beam (pair) with the best reception performance in the beam pair or Tx beam transmitted from the base station in the future is predicted using the previous beam measurement results. For example, in DL Rx beam prediction, the base station fixes or selects the best Tx beam and continuously transmits a reference signal (RS), and the UE uses different DL Rx beams to receive and measure the RS, and predicts the best Rx beam through the measurement results. In this way, RS transmission resources and UE measurement overhead may be saved and UE measurement delay is reduced.

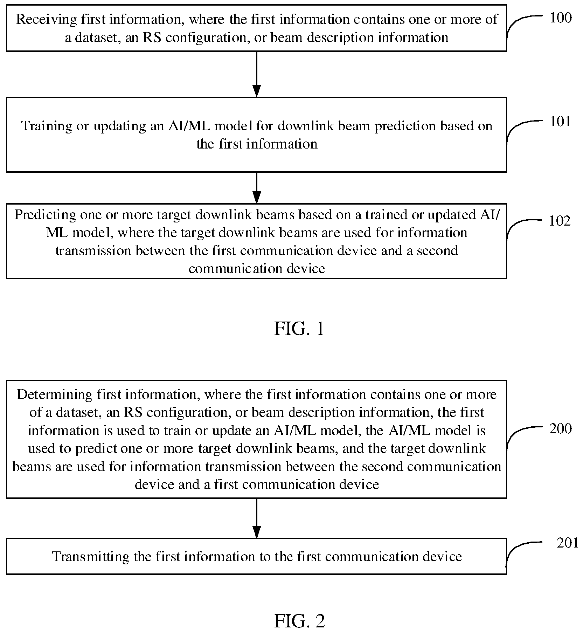

FIG. 1 is a first schematic flowchart of a method for downlink beam prediction according to an embodiment of the present application. As shown in FIG. 1, the method is performed by a first communication device and includes the following steps.

Step 100: receiving first information, where the first information contains one or more of a dataset, a reference signal (RS) configuration, or beam description information.

Step 101: training or updating an artificial intelligence (AI) or machine learning (ML) model for downlink beam prediction based on the first information.

Step 102: predicting one or more target downlink beams based on a trained or updated AI/ML model, where the target downlink beams are used for information transmission between the first communication device and a second communication device.

In an embodiment, the first communication device may be a user equipment (UE) or a network device (such as a base station), and accordingly, the second communication device may be a network device or a UE for performing information transmission with the first communication device.

For example, when the first communication device is a UE, the second communication device may be a network device. The UE may receive the first information (transmitted from the network device or a third-party device), and the UE may train or update the AI/ML model for downlink beam prediction based on the received first information to predict one or more target downlink beams, where the predicted target downlink beams are used for information transmission between the UE and the network device.

For example, when the first communication device is a network device, the second communication device may be a UE. The network device may receive the first information (transmitted from the UE or a third-party device), and the network device may train or update the AI/ML model for downlink beam prediction based on the received first information to predict one or more target downlink beams, where the predicted target downlink beams are used for information transmission between the UE and the network device.

In order to avoid a problem that the target downlink beam predicted by the UE cannot be identified by the network device, or the target downlink beam predicted by the network device cannot be identified by the UE, in an embodiment of the present application, the second communication device may transmit the first information to the first communication device, where the first information may include one or more of the dataset, the RS configuration, or the beam description information. After receiving the first information, the first communication device may train or update the AI/ML model for downlink beam prediction based on the first information. Updating the model includes fine-tuning the model. That is, after receiving the first information, the first communication device may fine-tune the AI/ML model for downlink beam prediction based on the first information. Functions of the AI/ML model for downlink beam prediction may include: spatial-domain prediction, frequency-domain prediction, time-domain prediction, downlink beam pair prediction, downlink Tx beam prediction, downlink Rx beam prediction, etc. Spatial-domain prediction refers to measuring a small quantity of beams, or beams for other types of reference signals, and predicting the best beam among a large quantity of beams. Frequency-domain prediction refers to measuring the beams on frequency 1 and predicting the best beam among beams on frequency 2. Time-domain prediction refers to measuring the beam at a current moment and predicting the best beam at a future moment.

The RS measurement result may be any measurement result, such as RSRP, that may represent the downlink beam reception performance, and the specific form is not limited thereto.

After obtaining the trained or updated model, the first communication device may predict one or more target downlink beams through the trained or updated model based on the RS measurement result. The predicted target downlink beam may be a Tx beam, or an Rx beam, or a beam pair, which is used for information transmission between the first communication device and the second communication device.

The first information received by the first communication device may be predefined by the second communication device or a third-party device.

In case that the third-party device predefines the first information, in an implementation, the third-party device may transmit the first information to the first communication device and the second communication device; or, the third-party device may transmit the first information to the second communication device, and after receiving the first information, the second communication device may transmit the first information to the first communication device.

The first information may be transmitted through the control channel or data channel of an Uu interface, or may be transmitted through other interfaces or other channels, and the specific circumstances are not limited thereto.

In the method for downlink beam prediction provided by the embodiments of the present application, one or more of the dataset, the RS configuration, or the beam description information are transmitted to the first communication device, the first communication device may train or update the AI or ML model for downlink beam prediction based on these information and predict one or more target downlink beams based on the trained or updated AI/ML model, to effectively save RS transmission resources, UE measurement overhead and reduce UE measurement delay.

In an embodiment, receiving the first information contains:
receiving the first information transmitted from the second communication device.

In an embodiment, when the first communication device is a UE, the first information received by the UE may be transmitted from a network device. In a possible implementation, the network device predefines and transmits the first information to the UE. For example, the network device predefines an RS configuration and transmits the RS configuration to the UE, and the UE trains or updates the AI/ML model for downlink beam prediction based on the RS configuration transmitted from the network device.

When the first communication device is a network device, the first information received by the network device may be transmitted from the UE. In a possible implementation, the first information transmitted from the UE may include a dataset and/or beam description information, but does not include the RS configuration. The UE predefines the first information and transmits the first information to the network device. For example, the UE predefines a dataset and transmits the dataset to the network device, and then the network device trains or updates the AI/ML model for downlink beam prediction based on the dataset transmitted from the UE.

In an embodiment, the dataset contains one or more of the following:
a dataset identification; or
one or more dataset samples, where the dataset samples contain multiple beam identifications, an RS measurement result of a beam corresponding to each beam identification, and one or more beam identifications as prediction labels.

In an embodiment, the number of the dataset may be one or more, and the dataset identification represents different datasets, and different datasets correspond to different dataset identifications.

The dataset sample includes multiple beam identifications (beam IDs), RS measurement results of beams corresponding to these beam IDs, and one or more beam IDs as prediction labels. In an embodiment, in a procedure of pre-defining the dataset by the UE or the network device or the third-party device, each downlink beam corresponds to one beam ID. A downlink beam may be a Tx beam, an Rx beam, or a beam pair.

In a procedure of training or updating the AI/ML model for downlink beam prediction, the first communication device may use the RS measurement results of the downlink beams corresponding to the multiple beam IDs in the dataset sample as inputs of the model; and use one or more beam IDs as prediction labels in the dataset sample as output labels of the model.

In an embodiment, the RS configuration contains one or more of the following:
an RS configuration identification;
a first RS configuration belonging to a measurement set;
a second RS configuration belonging to a prediction set; or
a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the number of the RS configuration may be one or more, and the RS configuration identification represents different RS configurations, and different RS configurations correspond to different RS configuration identifications. The RS configuration may include the type of RS (e.g., a channel state information reference signal (CSI-RS), a synchronization signal block (SSB), a phase-tracking reference signal (PT-RS), a cell reference signal (CRS), a demodulation reference signal (DMRS), etc.), RS transmission resources and RS identification (RS ID), etc. RS ID is RS indication, for example, an indication of CSI-RS is a CSI-RS resource indication (CRI), and an indication of SSB is an SSB resource indication (SSBRI).

The measurement set refers to the RS configuration or the beam in the set, and is used to obtain the RS measurement result as inputs of the model; the prediction set refers to the RS configuration or beam in the set, and is used to determine one or more downlink beams as the prediction labels.

For example, the first communication device measures the RS transmitted on the beam in the measurement set, obtains an RS measurement result, and uses the RS measurement result as an input of the model. By measuring the RS transmitted on the beam in the prediction set, the first communication device calculates one or more best beams through a non-AI/ML method, and uses the one or more best beams as the output labels of the model.

It is necessary to distinguish which set different RS configurations belong to since the first communication device has different behaviors after receiving the first RS configuration belonging to the measurement set and the second RS configuration belonging to the prediction set.

In an implementation, an identification (ID) of the RS configuration may be used to distinguish which set different RS configurations belong to. For example, ID=0 represents a configuration of the measurement set, ID=1 represents a configuration of the prediction set; or ID being an odd number represents a configuration of the measurement set, and ID being an even number represents a configuration of the prediction set.

In case that the measurement set is a subset of the prediction set, only the prediction set may be configured with RS, and the RS configuration may include a second RS configuration belonging to the prediction set and a measurement set pattern, and the measurement set pattern is used to indicate a first RS configuration belonging to the measurement set in the prediction set.

In an embodiment, the measurement set pattern contains one or more of the following.
(1) A first pattern, where the first pattern is used to indicate whether each second RS configuration belonging to the prediction set belongs to the measurement set.

In an embodiment, the first pattern may be used to indicate whether each second RS configuration belonging to the prediction set belongs to the measurement set, to indicate the first RS configuration belonging to the measurement set in the prediction set.

In an implementation, the first pattern may be an added 1 bit in each RS resource configuration. For example, when the bit = 1, it indicates that the RS belongs to both the prediction set and the measurement set; when the bit = 0, it indicates that the RS belongs only to the prediction set.

In an implementation, the first pattern may be a string or a bitmap equal to a quantity of RS resource configurations. For example, when a bit at the corresponding position is 1, it indicates that the RS belongs to both the prediction set and the measurement set; when a bit at the corresponding position is 0, it indicates that the RS belongs only to the prediction set. 01011 may then indicate that a 2nd, 4th, and 5th RS in the prediction set are the measurement set.

(2) A second pattern, where the second pattern is used to indicate an RS identification corresponding to an RS configuration belonging to the measurement set.

In an embodiment, the second pattern may be used to indicate an RS identification corresponding to an RS configuration belonging to the measurement set, to indicate the first RS configuration belonging to the measurement set in the prediction set.

For example, the second pattern is: {2, 4, 6, 8}, which may indicate that a 2nd, 4th, 6th, and 8th RS in the prediction set are the measurement set.

(3) A third pattern, where the third pattern is used to indicate an arrangement rule of RS sequence numbers satisfied by RS configurations belonging to the measurement set.

In an embodiment, the third pattern may be used to indicate an arrangement rule of RS sequence numbers satisfied by RS configurations belonging to the measurement set, to indicate the first RS configuration belonging to the measurement set in the prediction set.

For example, the third pattern may be configured as: RSs with even sequence numbers in the prediction set are the measurement set. Different rules may be represented by a string, for example, 2 bits may represent 4 rules.

(4) A fourth pattern, where the fourth pattern is used to indicate a beam identification corresponding to an RS configuration belonging to the measurement set.

In an embodiment, in case that a corresponding beam ID is configured for each RS in the prediction set, the fourth pattern may be used to indicate beam sequence number satisfied by the RS configuration belonging to the measurement set, to indicate the first RS configuration belonging to the measurement set in the prediction set.

For example, the fourth pattern is: {2, 4, 6, 8}, which may indicate that a 2nd, 4th, 6th, and 8th downlink beams in the prediction set are the measurement set.

(5) A fifth pattern, where the fifth pattern is used to indicate an arrangement rule of beam sequence numbers satisfied by RS configurations belonging to the measurement set.

In an embodiment, in case that a corresponding beam ID is configured for each RS in the prediction set, the fifth pattern may be used to indicate an arrangement rule of beam sequence numbers satisfied by RS configurations belonging to the measurement set, to indicate the first RS configuration belonging to the measurement set in the prediction set.

For example, the fifth pattern may be configured as: downlink beams with even sequence numbers in the prediction set are the measurement set. Different rules may be represented by a string, for example, 2 bits may represent 4 rules.

In case that the measurement set is a subset of the prediction set, a way of measurement set pattern indication may be used when the RS is configured, to save the bit overhead for configuration.

In an embodiment, the beam description information contains one or more of the following:
a beam identification;
an RS identification;
network device antenna configuration information;
beam angle information; or
beam width information.

In an embodiment, the first communication device may train or update the AI/ML model for downlink beam prediction based on the beam description information, where the beam description information may include one or more of the beam ID, the RS ID, the network device antenna configuration information, the beam angle information, or the beam width information. In an embodiment, the beam description information may be used as assistance information together with the dataset and/or RS configuration to train or update the AI/ML model for downlink beam prediction, as well as the subsequent prediction procedure.

One piece of beam description information contains description information of one or more downlink beams. A downlink beam may be a Tx beam, an Rx beam, or a beam pair. In an embodiment, when one piece of beam description information contains description information of multiple downlink beams, the multiple downlink beams may be described separately in a list manner.

In an embodiment, in a procedure of pre-defining the beam description information by the UE or the network device or the third-party device, each downlink beam corresponds to one beam ID. RS ID is an indication of the RS transmitted on the downlink beam, for example, the indication of CSI-RS is CRI, and the indication of SSB is SSBRI. The network device antenna configuration information for a downlink beam, the angle information of a downlink beam and the width information of a downlink beam may also be used to describe the downlink beam when the downlink beam is described.

In an embodiment, after predicting the one or more target downlink beams, the method further includes:
transmitting second information to the second communication device.

In an embodiment, after predicting one or more target downlink beams, the first communication device may transmit second information to the second communication device, where the second information is used to inform the second communication device of the result of the one or more target downlink beams predicted by the first communication device.

After receiving the second information transmitted from the first communication device, the second communication device may learn the one or more target downlink beams predicted by the first communication device based on the first information and the second information, and then the first communication device and the second communication device may perform information transmission on the target downlink beam (i.e., best beam), to improve the transmission performance of the system.

The second information contains one or more of the following.
(1) A beam identification corresponding to the target downlink beam.

The second information may include a beam identification (ID) corresponding to the target downlink beam, and the second communication device may learn the target downlink beam predicted by the first communication device through the AI/ML model based on the beam ID corresponding to the target downlink beam.

A mapping relationship between the beam ID and the physical beam is known to the second communication device since the first information is defined by the second communication device or defined by a third-party device but known to the second communication device. That is, the beam ID corresponding to one or more target downlink beams predicted by the AI/ML model trained or updated by the first communication device using the first information may be identified by the second communication device and may correspond to the actual physical target downlink beam. The first communication device and the second communication device may subsequently communicate using the target downlink beam.

In an embodiment, the first communication device predicts only one target downlink beam through the AI/ML model, and the first communication device may transmit a beam ID corresponding to the target downlink beam to the second communication device.

In an embodiment, the first communication device predicts multiple target downlink beams through the AI/ML model, and the first communication device may select one of the target downlink beams and transmit the beam ID corresponding to the selected target downlink beam to the second communication device; or, the first communication device may transmit the beam IDs corresponding to multiple target downlink beams to the second communication device, and the second communication device selects one of the beam IDs.

(2) An RS identification corresponding to the target downlink beam.

The second information may include an RS identification (ID) corresponding to the target downlink beam, and the second communication device may learn, based on the RS ID corresponding to the target downlink beam, the target downlink beam predicted by the first communication device through the AI/ML model.

A mapping relationship between the RS ID and the physical beam is known to the second communication device since the first information is defined by the second communication device or defined by a third-party device but known to the second communication device. That is, the RS ID corresponding to one or more target downlink beams predicted by the AI/ML model trained or updated by the first communication device using the first information may be identified by the second communication device and may correspond to the actual physical target downlink beam. The first communication device and the second communication device may subsequently communicate using the target downlink beam.

In an embodiment, the first communication device predicts only one target downlink beam through the AI/ML model, and the first communication device may transmit an RS ID corresponding to the target downlink beam to the second communication device.

In an embodiment, the first communication device predicts multiple target downlink beams through the AI/ML model, and the first communication device may select one of the target downlink beams and transmit the RS ID corresponding to the selected target downlink beam to the second communication device; or, the first communication device may transmit the RS IDs corresponding to multiple target downlink beams to the second communication device, and the second communication device selects one of the RS IDs.

(3) An identification of the AI/ML model used to predict the target downlink beam.

Each model may correspond to a model identification (model ID) in case that multiple different AI/ML models are obtained after being trained or updated. In this case, the first communication device not only needs to transmit the beam ID or RS ID corresponding to the predicted target downlink beam, but also needs to transmit the model ID corresponding to the predicted target downlink beam, and the second communication device may know, based on the model ID, which AI/ML model the first communication device uses to predict the target downlink beam.

(4) Identifications of datasets used to predict the target downlink beam.

The second information may include the identifications of the datasets used to predict the target downlink beam in case that there are multiple different datasets used for training or updating to obtain multiple different AI/ML models, and then the second communication device may know, based on the identifications of the datasets used to predict the target downlink beam, which AI/ML model the first communication device uses to predict the target downlink beam.

For example, if the datasets are in one-to-one correspondence with the trained or updated models, the first communication device may transmit the identifications of the datasets, which represent the above-mentioned model IDs. The second communication device may know, based on the identifications of the datasets, a mapping relationship between the beam IDs output by the model used by the first communication device and the physical beams.

(5) Identifications of RS configurations used to predict the target downlink beam.

The second information may include the identifications of the RS configurations used to predict the target downlink beam in case that there are multiple different RS configurations used for training or updating to obtain multiple different AI/ML models, and then the second communication device may know, based on the identifications of the RS configurations used to predict the target downlink beam, which AI/ML model the first communication device uses to predict the target downlink beam.

For example, if the RS configurations are in one-to-one correspondence with the trained or updated models, the first communication device may transmit the identifications of the RS configurations, which represent the above-mentioned model IDs. The second communication device may know, based on the identifications of the RS configurations, a mapping relationship between the RS IDs output by the model used by the first communication device and the physical beams.

(6) An identification of beam description information used to predict the target downlink beam.

The second information may include the identification of the beam description information used to predict the target downlink beam in case that there are multiple different pieces of beam description information used for training or updating to obtain multiple different AI/ML models, and then the second communication device may know, based on the identification of beam description information used to predict the target downlink beam, which AI/ML model the first communication device uses to predict the target downlink beam.

For example, if the multiple pieces of beam description information are in one-to-one correspondence with the trained or updated models, the first communication device may transmit the identification of the beam description information, which represents the above-mentioned model ID. The second communication device may know, based on the identification of the beam description information, a mapping relationship between beam IDs or RS IDs output by the model used by the first communication device and the physical beams.

(7) Information on a quantity of input beams and a quantity of output beams for the AI/ML model used to predict the target downlink beam.

The second information may include information on the quantity of input beams and the quantity of output beams for the AI/ML model used to predict the target downlink beam in case that multiple different AI/ML models are trained or updated, and the quantity of input beams and the quantity of output beams for each AI/ML model is different, and then the second communication device may know, based on the information on the quantity of input beams and the quantity of output beams used to predict the target downlink beam, which AI/ML model the first communication device uses to predict the target downlink beam.

The quantity of input beams may be the quantity of input Tx beams for the model, or the quantity of input Rx beams for the model, or the quantity of input beam pairs for the model, etc.; the quantity of output beams may be the quantity of output Tx beams for the model, or the quantity of output Rx beams for the model, or the quantity of output beam pairs for the model, etc.

For example, if the first communication device trains or updates based on each pair of {quantity of input beams, quantity of output beams} to obtain an AI/ML model, then the information of the pair of {quantity of input beams, quantity of output beams} may represent the model. That is, the information of the pair of {quantity of input beams, quantity of output beams} transmitted from the first communication device may correspond to the model ID, and the second communication device may know, based on the information of the pair of {quantity of input beams, quantity of output beams}, a mapping relationship between the beam IDs or RS IDs output by the model used by the first communication device and the physical beam.

In an embodiment, the first information may be associated with one or more of an application scenario, a network device configuration, or a model function.

In an embodiment, different datasets, different RS configurations, and different beam description information may be targeted at different application scenarios, base station configurations, or AI functions, respectively.

In an embodiment, the application scenario includes: urban, rural, indoor, outdoor, highway, high-speed rail, urban macrocell (Uma), urban microcell (Umi), etc.; the base station configuration includes: base station antenna configuration, beam configuration, reference signal configuration, etc.; the AI function mainly includes spatial-domain prediction, frequency-domain prediction, time-domain prediction, downlink beam pair prediction, downlink Tx beam prediction, downlink Rx beam prediction, etc. The spatial-domain prediction refers to measuring a small quantity of beams, or beams for other types of reference signals, and predicting the best beam among a large quantity of beams. The frequency-domain prediction refers to measuring the beams on frequency 1 and predicting the best beam among beams on frequency 2. The time-domain prediction refers to measuring the beam at a current moment and predicting the best beam at a future moment.

AI/ML models for downlink beam prediction used in different scenarios may be obtained by associating the first information with one or more of an application scenario, a network device configuration, or a model function.

FIG. 2 is a second schematic flowchart of a method for downlink beam prediction according to an embodiment of the present application. As shown in FIG. 2, the method is performed by a second communication device and includes the following steps:
step 200: determining first information, where the first information contains one or more of a dataset, a reference signal (RS) configuration, or beam description information, the first information is used to train or update an artificial intelligence (AI) or machine learning (ML) model, the AI/ML model is used to predict one or more target downlink beams, and the target downlink beams are used for information transmission between the second communication device and a first communication device; and
step 201, transmitting the first information to the first communication device.

In an embodiment, the first communication device may be a user equipment (UE) or a network device (such as a base station), and accordingly, the second communication device may be a network device or a UE for performing information transmission with the first communication device.

For example, when the first communication device is a UE, the second communication device may be a network device. The UE may receive the first information (transmitted from the network device or a third-party device), and the UE may train or update the AI/ML model for downlink beam prediction based on the received first information to predict one or more target downlink beams, where the predicted target downlink beams are used for information transmission between the UE and the network device.

For example, when the first communication device is a network device, the second communication device may be a UE. The network device may receive the first information (transmitted from the UE or a third-party device), and the network device may train or update the AI/ML model for downlink beam prediction based on the received first information to predict one or more target downlink beams, where the predicted target downlink beams are used for information transmission between the UE and the network device.

In order to avoid a problem that the target downlink beam predicted by the UE cannot be identified by the network device, or the target downlink beam predicted by the network device cannot be identified by the UE, in an embodiment of the present application, the second communication device may transmit the first information to the first communication device, where the first information may include one or more of the dataset, the RS configuration, or the beam description information.

The first information determined by the second communication device may be pre-defined by the second communication device itself; or pre-defined by a third-party device and transmitted to the second communication device.

After determining the first information, the second communication device may transmit the first information to the first communication device. After receiving the first information, the first communication device may train or update the AI/ML model for downlink beam prediction based on the first information. Updating the model includes fine-tuning the model. That is, after receiving the first information, the first communication device may fine-tune the AI/ML model for downlink beam prediction based on the first information. Functions of the AI/ML model for downlink beam prediction may include: spatial-domain prediction, frequency-domain prediction, time-domain prediction, downlink beam pair prediction, downlink Tx beam prediction, downlink Rx beam prediction, etc. Spatial-domain prediction refers to measuring a small quantity of beams, or beams for other types of reference signals, and predicting the best beam among a large quantity of beams. Frequency-domain prediction refers to measuring the beams on frequency 1 and predicting the best beam among beams on frequency 2. Time-domain prediction refers to measuring the beam at a current moment and predicting the best beam at a future moment.

The RS measurement result may be any measurement result, such as RSRP, that may represent the downlink beam reception performance, and the specific form is not limited thereto.

After obtaining the trained or updated model, the first communication device may predict one or more target downlink beams through the trained or updated model based on the RS measurement result. The predicted target downlink beam may be a Tx beam, or an Rx beam, or a beam pair, which is used for information transmission between the first communication device and the second communication device.

The first information may be transmitted through the control channel or data channel of an Uu interface, or may be transmitted through other interfaces or other channels, and the specific circumstances are not limited thereto.

In the method for downlink beam prediction provided by the embodiments of the present application, one or more of the dataset, the RS configuration, or the beam description information are transmitted to the first communication device, the first communication device may train or update the AI or ML model for downlink beam prediction based on these information and predict one or more target downlink beams based on the trained or updated AI/ML model, to effectively save RS transmission resources, UE measurement overhead and reduce UE measurement delay.

In an embodiment, the dataset contains one or more of the following:
a dataset identification; or
one or more dataset samples, where the dataset samples contain multiple beam identifications, an RS measurement result of a beam corresponding to each beam identification, and one or more beam identifications as prediction labels.

In an embodiment, the number of the dataset may be one or more, and the dataset identification represents different datasets, and different datasets correspond to different dataset identifications.

The dataset sample includes multiple beam identifications (beam IDs), RS measurement results of beams corresponding to these beam IDs, and one or more beam IDs as prediction labels. In an embodiment, in a procedure of pre-defining the dataset by the UE or the network device or the third-party device, each downlink beam corresponds to one beam ID. A downlink beam may be a Tx beam, an Rx beam, or a beam pair.

In a procedure of training or updating the AI/ML model for downlink beam prediction, the first communication device may use the RS measurement results of the downlink beams corresponding to the multiple beam IDs in the dataset sample as inputs of the model; and use one or more beam IDs as prediction labels in the dataset sample as output labels of the model.

In an embodiment, the RS configuration contains one or more of the following:
an RS configuration identification;
a first RS configuration belonging to a measurement set;
a second RS configuration belonging to a prediction set; or
a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the number of the RS configuration may be one or more, and the RS configuration identification represents different RS configurations, and different RS configurations correspond to different RS configuration identifications. The RS configuration may include the type of RS (e.g., a channel state information reference signal (CSI-RS), a synchronization signal block (SSB), a phase-tracking reference signal (PT-RS), a cell reference signal (CRS), a demodulation reference signal (DMRS), etc.), RS transmission resources and RS identification (RS ID), etc. RS ID is RS indication, for example, an indication of CSI-RS is a CSI-RS resource indication (CRI), and an indication of SSB is an SSB resource indication (SSBRI).

The measurement set refers to the RS configuration or the beam in the set, and is used to obtain the RS measurement result as inputs of the model; the prediction set refers to the RS configuration or beam in the set, and is used to determine one or more downlink beams as the prediction labels.

For example, the first communication device measures the RS transmitted on the beam in the measurement set, obtains an RS measurement result, and uses the RS measurement result as an input of the model. By measuring the RS transmitted on the beam in the prediction set, the first communication device calculates one or more best beams through a non-AI/ML method, and uses the one or more best beams as the output labels of the model.

It is necessary to distinguish which set different RS configurations belong to since the first communication device has different behaviors after receiving the first RS configuration belonging to the measurement set and the second RS configuration belonging to the prediction set.

In an implementation, an identification (ID) of the RS configuration may be used to distinguish which set different RS configurations belong to. For example, ID=0 represents a configuration of the measurement set, ID=1 represents a configuration of the prediction set; or ID being an odd number represents a configuration of the measurement set, and ID being an even number represents a configuration of the prediction set.

In case that the measurement set is a subset of the prediction set, only the prediction set may be configured with RS, and the RS configuration may include a second RS configuration belonging to the prediction set and a measurement set pattern, and the measurement set pattern is used to indicate a first RS configuration belonging to the measurement set in the prediction set.

In an embodiment, the measurement set pattern contains one or more of the following.
(1) A first pattern, where the first pattern is used to indicate whether each second RS configuration belonging to the prediction set belongs to the measurement set.

In an embodiment, the first pattern may be used to indicate whether each second RS configuration belonging to the prediction set belongs to the measurement set, to indicate the first RS configuration belonging to the measurement set in the prediction set.

In an implementation, the first pattern may be an added 1 bit in each RS resource configuration. For example, when the bit = 1, it indicates that the RS belongs to both the prediction set and the measurement set; when the bit = 0, it indicates that the RS belongs only to the prediction set.

In an implementation, the first pattern may be a string or a bitmap equal to a quantity of RS resource configurations. For example, when a bit at the corresponding position is 1, it indicates that the RS belongs to both the prediction set and the measurement set; when a bit at the corresponding position is 0, it indicates that the RS belongs only to the prediction set. 01011 may then indicate that a 2nd, 4th, and 5th RS in the prediction set are the measurement set.

(2) A second pattern, where the second pattern is used to indicate an RS identification corresponding to an RS configuration belonging to the measurement set.

In an embodiment, the second pattern may be used to indicate an RS identification corresponding to an RS configuration belonging to the measurement set, to indicate the first RS configuration belonging to the measurement set in the prediction set.

For example, the second pattern is: {2, 4, 6, 8}, which may indicate that a 2nd, 4th, 6th, and 8th RS in the prediction set are the measurement set.

(3) A third pattern, where the third pattern is used to indicate an arrangement rule of RS sequence numbers satisfied by RS configurations belonging to the measurement set.

In an embodiment, the third pattern may be used to indicate an arrangement rule of RS sequence numbers satisfied by RS configurations belonging to the measurement set, to indicate the first RS configuration belonging to the measurement set in the prediction set.

For example, the third pattern may be configured as: RSs with even sequence numbers in the prediction set are the measurement set. Different rules may be represented by a string, for example, 2 bits may represent 4 rules.

(4) A fourth pattern, where the fourth pattern is used to indicate a beam identification corresponding to an RS configuration belonging to the measurement set.

In an embodiment, in case that a corresponding beam ID is configured for each RS in the prediction set, the fourth pattern may be used to indicate beam sequence number satisfied by the RS configuration belonging to the measurement set, to indicate the first RS configuration belonging to the measurement set in the prediction set.

For example, the fourth pattern is: {2, 4, 6, 8}, which may indicate that a 2nd, 4th, 6th, and 8th downlink beams in the prediction set are the measurement set.

(5) A fifth pattern, where the fifth pattern is used to indicate an arrangement rule of beam sequence numbers satisfied by RS configurations belonging to the measurement set.

In an embodiment, in case that a corresponding beam ID is configured for each RS in the prediction set, the fifth pattern may be used to indicate an arrangement rule of beam sequence numbers satisfied by RS configurations belonging to the measurement set, to indicate the first RS configuration belonging to the measurement set in the prediction set.

For example, the fifth pattern may be configured as: downlink beams with even sequence numbers in the prediction set are the measurement set. Different rules may be represented by a string, for example, 2 bits may represent 4 rules.

In case that the measurement set is a subset of the prediction set, a way of measurement set pattern indication may be used when the RS is configured, to save the bit overhead for configuration.

In an embodiment, the beam description information contains one or more of the following:
a beam identification;
an RS identification;
network device antenna configuration information;
beam angle information; or
beam width information.

In an embodiment, the first communication device may train or update the AI/ML model for downlink beam prediction based on the beam description information, where the beam description information may include one or more of the beam ID, the RS ID, network device antenna configuration information, the beam angle information, or the beam width information. In an embodiment, the beam description information may be used as assistance information together with the dataset and/or RS configuration to train or update the AI/ML model for downlink beam prediction, as well as the subsequent prediction procedure.

One piece of beam description information contains description information of one or more downlink beams. A downlink beam may be a Tx beam, an Rx beam, or a beam pair. In an embodiment, when one piece of beam description information contains description information of multiple downlink beams, the multiple downlink beams may be described separately in a list manner.

In an embodiment, in a procedure of pre-defining the beam description information by the UE or the network device or the third-party device, each downlink beam corresponds to one beam ID. RS ID is an indication of the RS transmitted on the downlink beam, for example, the indication of CSI-RS is CRI, and the indication of SSB is SSBRI. The network device antenna configuration information for a downlink beam, the angle information of a downlink beam and the width information of the downlink beam may also be used to describe the downlink beam when the downlink beam is described.

In an embodiment, the first information may be associated with one or more of an application scenario, a network device configuration, or a model function.

In an embodiment, different datasets, different RS configurations, and different beam description information may be targeted at different application scenarios, base station configurations, or AI functions, respectively.

In an embodiment, the application scenario includes: urban, rural, indoor, outdoor, highway, high-speed rail, urban macrocell (Uma), urban microcell (Umi), etc.; the base station configuration includes: base station antenna configuration, beam configuration, reference signal configuration, etc.; the AI function mainly includes spatial-domain prediction, frequency-domain prediction, time-domain prediction, downlink beam pair prediction, downlink Tx beam prediction, downlink Rx beam prediction, etc. The spatial-domain prediction refers to measuring a small quantity of beams, or beams for other types of reference signals, and predicting the best beam among a large quantity of beams. The frequency-domain prediction refers to measuring the beams on frequency 1 and predicting the best beam among beams on frequency 2. The time-domain prediction refers to measuring the beam at a current moment and predicting the best beam at a future moment.

AI/ML models for downlink beam prediction used in different scenarios may be obtained by associating the first information with one or more of an application scenario, a network device configuration, or a model function.

In an embodiment, the method further includes:
receiving second information transmitted from the first communication device; and
determining the target downlink beam for information transmission with the first communication device based on the second information and a mapping relationship between a beam identification and a physical beam.

In an embodiment, after predicting one or more target downlink beams, the first communication device may transmit second information to the second communication device, where the second information is used to inform the second communication device of the result of the one or more target downlink beams predicted by the first communication device.

After receiving the second information transmitted from the first communication device, the second communication device may learn the one or more target downlink beams predicted by the first communication device based on the first information and the second information, and then the first communication device and the second communication device may perform information transmission on the target downlink beam (i.e., best beam), to improve the transmission performance of the system.

The second information contains one or more of the following.
(1) A beam identification corresponding to the target downlink beam.

The second information may include a beam identification (ID) corresponding to the target downlink beam, and the second communication device may learn the target downlink beam predicted by the first communication device through the AI/ML model based on the beam ID corresponding to the target downlink beam.

In an embodiment, the first communication device predicts only one target downlink beam through the AI/ML model, and the first communication device may transmit a beam ID corresponding to the target downlink beam to the second communication device.

A mapping relationship between the beam ID and the physical beam is known to the second communication device since the first information is defined by the second communication device or defined by a third-party device but known to the second communication device. That is, the beam ID corresponding to one or more target downlink beams predicted by the AI/ML model trained or updated by the first communication device using the first information may be identified by the second communication device and may correspond to the actual physical target downlink beam. The first communication device and the second communication device may subsequently communicate using the target downlink beam.

In an embodiment, the first communication device predicts multiple target downlink beams through the AI/ML model, and the first communication device may select one of the target downlink beams and transmit the beam ID corresponding to the selected target downlink beam to the second communication device; or, the first communication device may transmit the beam IDs corresponding to multiple target downlink beams to the second communication device, and the second communication device selects one of the beam IDs.

(2) An RS identification corresponding to the target downlink beam.

The second information may include an RS identification (ID) corresponding to the target downlink beam, and the second communication device may learn, based on the RS ID corresponding to the target downlink beam, the target downlink beam predicted by the first communication device through the AI/ML model.

A mapping relationship between the RS ID and the physical beam is known to the second communication device since the first information is defined by the second communication device or defined by a third-party device but known to the second communication device. That is, the RS ID corresponding to one or more target downlink beams predicted by the AI/ML model trained or updated by the first communication device using the first information may be identified by the second communication device and may correspond to the actual physical target downlink beam. The first communication device and the second communication device may subsequently communicate using the target downlink beam.

In an embodiment, the first communication device predicts only one target downlink beam through the AI/ML model, and the first communication device may transmit an RS ID corresponding to the target downlink beam to the second communication device.

In an embodiment, the first communication device predicts multiple target downlink beams through the AI/ML model, and the first communication device may select one of the target downlink beams and transmit the RS ID corresponding to the selected target downlink beam to the second communication device; or, the first communication device may transmit the RS IDs corresponding to multiple target downlink beams to the second communication device, and the second communication device selects one of the RS IDs.

(3) An identification of the AI/ML model used to predict the target downlink beam.

Each model may correspond to a model ID in case that multiple different AI/ML models are obtained after being trained or updated. In this case, the first communication device not only needs to transmit the beam ID or RS ID corresponding to the predicted target downlink beam, but also needs to transmit the model ID corresponding to the predicted target downlink beam, and the second communication device may know, based on the model ID, which AI/ML model the first communication device uses to predict the target downlink beam.

(4) Identifications of datasets used to predict the target downlink beam.

The second information may include the identifications of the datasets used to predict the target downlink beam in case that there are multiple different datasets used for training or updating to obtain multiple different AI/ML models, and then the second communication device may know, based on the identifications of the datasets used to predict the target downlink beam, which AI/ML model the first communication device uses to predict the target downlink beam.

For example, if the datasets are in one-to-one correspondence with the trained or updated models, the first communication device may transmit the identifications of the datasets, which represent the above-mentioned model IDs. The second communication device may know, based on the identifications of the datasets, a mapping relationship between the beam IDs output by the model used by the first communication device and the physical beams.

(5) Identifications of RS configurations used to predict the target downlink beam.

The second information may include the identifications of the RS configurations used to predict the target downlink beam in case that there are multiple different RS configurations used for training or updating to obtain multiple different AI/ML models, and then the second communication device may know, based on the identifications of the RS configurations used to predict the target downlink beam, which AI/ML model the first communication device uses to predict the target downlink beam.

For example, if the RS configurations are in one-to-one correspondence with the trained or updated models, the first communication device may transmit the identifications of the RS configurations, which represent the above-mentioned model IDs. The second communication device may know, based on the identifications of the RS configurations, a mapping relationship between the RS IDs output by the model used by the first communication device and the physical beams.

(6) An identification of beam description information used to predict the target downlink beam.

The second information may include the identification of the beam description information used to predict the target downlink beam in case that there are multiple different pieces of beam description information used for training or updating to obtain multiple different AI/ML models, and then the second communication device may know, based on the identification of beam description information used to predict the target downlink beam, which AI/ML model the first communication device uses to predict the target downlink beam.

For example, if the multiple pieces of beam description information are in one-to-one correspondence with the trained or updated models, the first communication device may transmit the identification of the beam description information, which represents the above-mentioned model ID. The second communication device may know, based on the identification of the beam description information, a mapping relationship between beam IDs or RS IDs output by the model used by the first communication device and the physical beams.

(7) Information on a quantity of input beams and a quantity of output beams for the AI/ML model used to predict the target downlink beam.

The second information may include information on the quantity of input beams and the quantity of output beams for the AI/ML model used to predict the target downlink beam in case that multiple different AI/ML models are trained or updated, and the quantity of input beams and the quantity of output beams for each AI/ML model is different, and then the second communication device may know, based on the information on the quantity of input beams and the quantity of output beams used to predict the target downlink beam, which AI/ML model the first communication device uses to predict the target downlink beam.

The quantity of input beams may be the quantity of input Tx beams for the model, or the quantity of input Rx beams for the model, or the quantity of input beam pairs for the model, etc.; the quantity of output beams may be the quantity of output Tx beams for the model, or the quantity of output Rx beams for the model, or the quantity of output beam pairs for the model, etc.

For example, if the first communication device trains or updates based on each pair of {quantity of input beams, quantity of output beams} to obtain an AI/ML model, then the information of the pair of {quantity of input beams, quantity of output beams} may represent the model. That is, the information of the pair of {quantity of input beams, quantity of output beams} transmitted from the first communication device may correspond to the model ID, and the second communication device may know, based on the information of the pair of {quantity of input beams, quantity of output beams}, a mapping relationship between the beam ID or RS ID output by the model used by the first communication device and the physical beam.

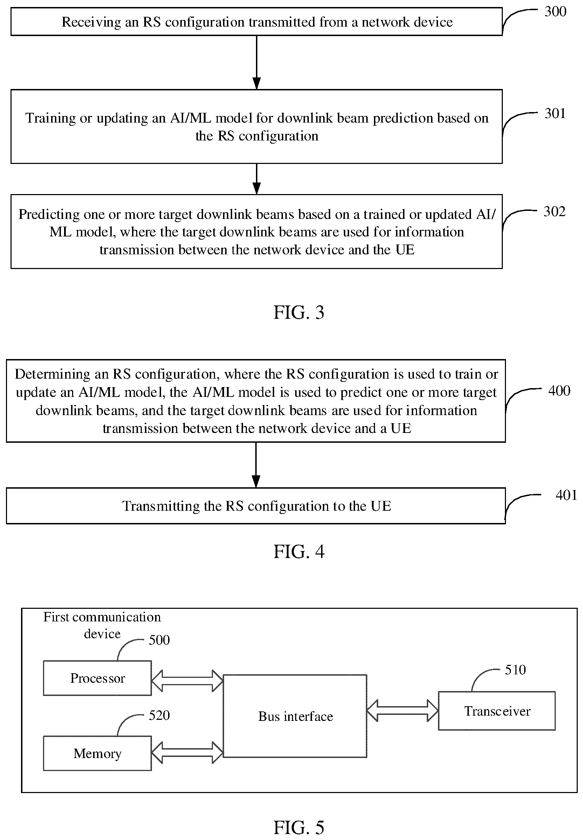

FIG. 3 is a third schematic flowchart of a method for downlink beam prediction according to an embodiment of the present application. As shown in FIG. 3, the method is performed by a user equipment (UE) and includes the following steps.

Step 300: receiving a reference signal (RS) configuration transmitted from a network device.

Step 301: training or updating an artificial intelligence (AI) or machine learning (ML) model for downlink beam prediction based on the RS configuration.

Step 302: predicting one or more target downlink beams based on a trained or updated AI/ML model, where the target downlink beams are used for information transmission between the network device and the UE.

In an embodiment, the network device may determine the RS configuration and transmit the RS configuration to the UE. The first information determined by the network device may be pre-defined by the network device itself; or pre-defined by a third-party device and transmitted to the network device.

After receiving the RS configuration transmitted from the network device, the UE may train or update the AI/ML model for downlink beam prediction based on the RS configuration. Updating the model includes fine-tuning the model. That is, after receiving the RS configuration, the UE may fine-tune the AI/ML model for downlink beam prediction based on the RS configuration. Functions of the AI/ML model for downlink beam prediction may include: spatial-domain prediction, frequency-domain prediction, time-domain prediction, downlink beam pair prediction, downlink Tx beam prediction, downlink Rx beam prediction, etc. Spatial-domain prediction refers to measuring a small quantity of beams, or beams for other types of reference signals, and predicting the best beam among a large quantity of beams. Frequency-domain prediction refers to measuring the beams on frequency 1 and predicting the best beam among beams on frequency 2. Time-domain prediction refers to measuring the beam at a current moment and predicting the best beam at a future moment.

The RS measurement result may be any measurement result, such as a reference signal received power (RSRP), that may represent the downlink beam reception performance, and the specific form is not limited thereto.

After obtaining the trained or updated model, the UE may measure the RS to obtain RS measurement result, and predict one or more target downlink beams through the trained or updated model based on the RS measurement result. The predicted target downlink beam may be a Tx beam, or an Rx beam, or a beam pair, which is used for information transmission between the UE and the network device.

The RS configuration may be transmitted through the control channel or data channel of an Uu interface, or may be transmitted through other interfaces or other channels, and the specific circumstances are not limited thereto.

In the method for downlink beam prediction provided by the embodiments of the present application, the RS configuration is transmitted to the UE, the UE may train or update the AI or ML model for downlink beam prediction based on the received RS configuration and predict one or more target downlink beams based on the trained or updated AI/ML model, to effectively save RS transmission resources, UE measurement overhead and reduce UE measurement delay.

In an embodiment, the RS configuration contains an RS configuration identification, a second RS configuration belonging to a prediction set, and a measurement set pattern, where the measurement set pattern is used to indicate a first RS configuration belonging to a measurement set.

The first RS configuration is used to obtain RS measurement results as inputs of the model; and the second RS configuration is used to determine one or more downlink beams as prediction labels.

In an embodiment, the number of the RS configuration may be one or more, and the RS configuration identification represents different RS configurations, and different RS configurations correspond to different RS configuration identifications. The RS configuration may include the type of RS (e.g., a channel state information reference signal (CSI-RS), a synchronization signal block (SSB), a phase-tracking reference signal (PT-RS), a cell reference signal (CRS), a demodulation reference signal (DMRS), etc.), RS transmission resources and RS identification (RS ID), etc. RS ID is RS indication, for example, an indication of CSI-RS is a CSI-RS resource indication (CRI), and an indication of SSB is an SSB resource indication (SSBRI).

The measurement set refers to the RS configuration or the beam in the set, and is used to obtain the RS measurement result as inputs of the model; the prediction set refers to the RS configuration or beam in the set, and is used to determine one or more downlink beams as the prediction labels.

For example, the UE measures the RS transmitted on the beam in the measurement set, obtains an RS measurement result, and uses the RS measurement result as an input of the model. By measuring the RS transmitted on the beam in the prediction set, the UE calculates one or more best beams through a non-AI/ML method, and uses the one or more best beams as the output labels of the model.

It is necessary to distinguish which set different RS configurations belong to since the UE has different behaviors after receiving the first RS configuration belonging to the measurement set and the second RS configuration belonging to the prediction set.

In an implementation, an identification (ID) of the RS configuration may be used to distinguish which set different RS configurations belong to. For example, ID=0 represents a configuration of the measurement set, ID=1 represents a configuration of the prediction set; or ID being an odd number represents a configuration of the measurement set, and ID being an even number represents a configuration of the prediction set.

In case that the measurement set is a subset of the prediction set, only the prediction set may be configured with RS, and the RS configuration may include a second RS configuration belonging to the prediction set and a measurement set pattern, and the measurement set pattern is used to indicate a first RS configuration belonging to the measurement set in the prediction set.

In an embodiment, the measurement set pattern contains one or more of the following.
(1) A first pattern, where the first pattern is used to indicate whether each second RS configuration belonging to the prediction set belongs to the measurement set.

In an embodiment, the first pattern may be used to indicate whether each second RS configuration belonging to the prediction set belongs to the measurement set, to indicate the first RS configuration belonging to the measurement set in the prediction set.

In an implementation, the first pattern may be an added 1 bit in each RS resource configuration. For example, when the bit = 1, it indicates that the RS belongs to both the prediction set and the measurement set; when the bit = 0, it indicates that the RS belongs only to the prediction set.

In an implementation, the first pattern may be a string or a bitmap equal to a quantity of RS resource configurations. For example, when a bit at the corresponding position is 1, it indicates that the RS belongs to both the prediction set and the measurement set; when a bit at the corresponding position is 0, it indicates that the RS belongs only to the prediction set. 01011 may then indicate that a 2nd, 4th, and 5th RS in the prediction set are the measurement set.

(2) A second pattern, where the second pattern is used to indicate an RS identification corresponding to an RS configuration belonging to the measurement set.

In an embodiment, the second pattern may be used to indicate an RS identification corresponding to an RS configuration belonging to the measurement set, to indicate the first RS configuration belonging to the measurement set in the prediction set.

For example, the second pattern is: {2, 4, 6, 8}, which may indicate that a 2nd, 4th, 6th, and 8th RS in the prediction set are the measurement set.

(3) A third pattern, where the third pattern is used to indicate an arrangement rule of RS sequence numbers satisfied by RS configurations belonging to the measurement set.

In an embodiment, the third pattern may be used to indicate an arrangement rule of RS sequence numbers satisfied by RS configurations belonging to the measurement set, to indicate the first RS configuration belonging to the measurement set in the prediction set.

For example, the third pattern may be configured as: RSs with even sequence numbers in the prediction set are the measurement set. Different rules may be represented by a string, for example, 2 bits may represent 4 rules.

(4) A fourth pattern, where the fourth pattern is used to indicate a beam identification corresponding to an RS configuration belonging to the measurement set.

In an embodiment, in case that a corresponding beam ID is configured for each RS in the prediction set, the fourth pattern may be used to indicate beam sequence number satisfied by the RS configuration belonging to the measurement set, to indicate the first RS configuration belonging to the measurement set in the prediction set.

For example, the fourth pattern is: {2, 4, 6, 8}, which may indicate that a 2nd, 4th, 6th, and 8th downlink beams in the prediction set are the measurement set.

(5) A fifth pattern, where the fifth pattern is used to indicate an arrangement rule of beam sequence numbers satisfied by RS configurations belonging to the measurement set.

In an embodiment, in case that a corresponding beam ID is configured for each RS in the prediction set, the fifth pattern may be used to indicate an arrangement rule of beam sequence numbers satisfied by RS configurations belonging to the measurement set, to indicate the first RS configuration belonging to the measurement set in the prediction set.

For example, the fifth pattern may be configured as: downlink beams with even sequence numbers in the prediction set are the measurement set. Different rules may be represented by a string, for example, 2 bits may represent 4 rules.

In case that the measurement set is a subset of the prediction set, a way of measurement set pattern indication may be used when the RS is configured, to save the bit overhead for configuration.

In an embodiment, after predicting the one or more target downlink beams, the method further includes:
transmitting second information to the network device.

In an embodiment, after predicting one or more target downlink beams, the UE may transmit second information to the network device, where the second information is used to inform the network device of the result of the one or more target downlink beams predicted by the UE.

After receiving the second information transmitted from the UE, the network device may learn the one or more target downlink beams predicted by the UE based on the first information and the second information, and then the UE and the network device may perform information transmission on the target downlink beam (i.e., best beam), to improve the transmission performance of the system.

The second information contains one or more of the following.
(1) A beam identification corresponding to the target downlink beam.

The second information may include a beam identification (ID) corresponding to the target downlink beam, and the network device may learn the target downlink beam predicted by the UE through the AI/ML model based on the beam ID corresponding to the target downlink beam.

A mapping relationship between the beam ID and the physical beam is known to the network device since the first information is defined by the network device or defined by a third-party device but known to the network device. That is, the beam ID corresponding to one or more target downlink beams predicted by the AI/ML model trained or updated by the UE using the first information may be identified by the network device and may correspond to the actual physical target downlink beam. The UE and the network device may subsequently communicate using the target downlink beam.

In an embodiment, the UE predicts only one target downlink beam through the AI/ML model, and the UE may transmit a beam ID corresponding to the target downlink beam to the network device.

In an embodiment, the UE predicts multiple target downlink beams through the AI/ML model, and the UE may select one of the target downlink beams and transmit the beam ID corresponding to the selected target downlink beam to the network device; or, the UE may transmit the beam IDs corresponding to multiple target downlink beams to the network device, and the network selects one of the beam IDs.

(2) An RS identification corresponding to the target downlink beam.

The second information may include an RS ID corresponding to the target downlink beam, and the network device may learn, based on the RS ID corresponding to the target downlink beam, the target downlink beam predicted by the UE through the AI/ML model.

A mapping relationship between the RS ID and the physical beam is known to the network device since the first information is defined by the network device or defined by a third-party device but known to the network device. That is, the RS ID corresponding to one or more target downlink beams predicted by the AI/ML model trained or updated by the UE using the first information may be identified by the network device and may correspond to the actual physical target downlink beam. The UE and the network device may subsequently communicate using the target downlink beam.

In an embodiment, the UE predicts only one target downlink beam through the AI/ML model, and the UE may transmit an RS ID corresponding to the target downlink beam to the network device.

In an embodiment, the UE predicts multiple target downlink beams through the AI/ML model, and the UE may select one of the target downlink beams and transmit the RS ID corresponding to the selected target downlink beam to the network device; or, the UE may transmit the RS IDs corresponding to multiple target downlink beams to the network device, and the network selects one of the RS IDs.

(3) An identification of the AI/ML model used to predict the target downlink beam.

Each model may correspond to a model ID in case that multiple different AI/ML models are obtained after being trained or updated. In this case, the UE not only needs to transmit the beam ID or RS ID corresponding to the predicted target downlink beam, but also needs to transmit the model ID corresponding to the predicted target downlink beam, and the network device may know, based on the model ID, which AI/ML model the UE uses to predict the target downlink beam.

(4) Identifications of RS configurations used to predict the target downlink beam.

The second information may include the identifications of the RS configurations used to predict the target downlink beam in case that there are multiple different RS configurations used for training or updating to obtain multiple different AI/ML models, and then the network device may know, based on the identifications of the RS configurations used to predict the target downlink beam, which AI/ML model the UE uses to predict the target downlink beam.

For example, if the RS configurations are in one-to-one correspondence with the trained or updated models, the UE may transmit the identifications of the RS configurations, which represent the above-mentioned model IDs. The network device may know, based on the identifications of the RS configurations, a mapping relationship between the RS IDs output by the model used by the UE and the physical beams.

(5) Information on a quantity of input beams and a quantity of output beams for the AI/ML model used to predict the target downlink beam.

The second information may include information on the quantity of input beams and the quantity of output beams for the AI/ML model used to predict the target downlink beam in case that multiple different AI/ML models are trained or updated, and the quantity of input beams and the quantity of output beams for each AI/ML model is different, and then the network device may know, based on the information on the quantity of input beams and the quantity of output beams used to predict the target downlink beam, which AI/ML model the UE uses to predict the target downlink beam.

The quantity of input beams may be the quantity of input Tx beams for the model, or the quantity of input Rx beams for the model, or the quantity of input beam pairs for the model, etc.; the quantity of output beams may be the quantity of output Tx beams for the model, or the quantity of output Rx beams for the model, or the quantity of output beam pairs for the model, etc.

For example, if the UE trains or updates based on each pair of {quantity of input beams, quantity of output beams} to obtain an AI/ML model, then the information of the pair of {quantity of input beams, quantity of output beams} may represent the model. That is, the information of the pair of {quantity of input beams, quantity of output beams} transmitted from the UE may correspond to the model ID, and the network device may know, based on the information of the pair of {quantity of input beams, quantity of output beams}, a mapping relationship between the beam IDs or RS IDs output by the model used by the UE and the physical beam.

FIG. 4 is a fourth schematic flowchart of a method for downlink beam prediction according to an embodiment of the present application. As shown in FIG. 4, the method is performed by a network device and includes the following steps.

Step 400: determining a reference signal (RS) configuration, where the RS configuration is used to train or update an artificial intelligence (AI) or machine learning (ML) model, the AI/ML model is used to predict one or more target downlink beams, and the target downlink beams are used for information transmission between the network device and a user equipment (UE).

Step 401, transmitting the RS configuration to the UE.

In an embodiment, the network device may determine the RS configuration and transmit the RS configuration to the UE. The first information determined by the network device may be pre-defined by the network device itself; or pre-defined by a third-party device and transmitted to the network device.

After receiving the RS configuration transmitted from the network device, the UE may train or update the AI/ML model for downlink beam prediction based on the RS configuration. Updating the model includes fine-tuning the model. That is, after receiving the RS configuration, the UE may fine-tune the AI/ML model for downlink beam prediction based on the RS configuration. Functions of the AI/ML model for downlink beam prediction may include: spatial-domain prediction, frequency-domain prediction, time-domain prediction, downlink beam pair prediction, downlink Tx beam prediction, downlink Rx beam prediction, etc. Spatial-domain prediction refers to measuring a small quantity of beams, or beams for other types of reference signals, and predicting the best beam among a large quantity of beams. Frequency-domain prediction refers to measuring the beams on frequency 1 and predicting the best beam among beams on frequency 2. Time-domain prediction refers to measuring the beam at a current moment and predicting the best beam at a future moment.

The RS measurement result may be any measurement result, such as a reference signal received power (RSRP), that may represent the downlink beam reception performance, and the specific form is not limited thereto.

After obtaining the trained or updated model, the UE may measure the RS to obtain RS measurement result, and predict one or more target downlink beams through the trained or updated model based on the RS measurement result. The predicted target downlink beam may be a Tx beam, or an Rx beam, or a beam pair, which is used for information transmission between the UE and the network device.

The RS configuration may be transmitted through the control channel or data channel of an Uu interface, or may be transmitted through other interfaces or other channels, and the specific circumstances are not limited thereto.

In the method for downlink beam prediction provided by the embodiments of the present application, the RS configuration is transmitted to the UE, the UE may train or update the AI or ML model for downlink beam prediction based on received RS configuration and predict one or more target downlink beams based on the trained or updated AI/ML model, to effectively save RS transmission resources, UE measurement overhead and reduce UE measurement delay.

In an embodiment, the RS configuration contains an RS configuration identification, a second RS configuration belonging to a prediction set, and a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the number of the RS configuration may be one or more, and the RS configuration identification represents different RS configurations, and different RS configurations correspond to different RS configuration identifications. The RS configuration may include the type of RS (e.g., a channel state information reference signal (CSI-RS), a synchronization signal block (SSB), a phase-tracking reference signal (PT-RS), a cell reference signal (CRS), a demodulation reference signal (DMRS), etc.), RS transmission resources and RS identification (RS ID), etc. RS ID is RS indication, for example, an indication of CSI-RS is a CSI-RS resource indication (CRI), and an indication of SSB is an SSB resource indication (SSBRI).

The measurement set refers to the RS configuration or the beam in the set, and is used to obtain the RS measurement result as inputs of the model; the prediction set refers to the RS configuration or beam in the set, and is used to determine one or more downlink beams as the prediction labels.

For example, the UE measures the RS transmitted on the beam in the measurement set, obtains an RS measurement result, and uses the RS measurement result as an input of the model. By measuring the RS transmitted on the beam in the prediction set, the UE calculates one or more best beams through a non-AI/ML method, and uses the one or more best beams as the output labels of the model.

It is necessary to distinguish which set different RS configurations belong to since the UE has different behaviors after receiving the first RS configuration belonging to the measurement set and the second RS configuration belonging to the prediction set.

In an implementation, an identification (ID) of the RS configuration may be used to distinguish which set different RS configurations belong to. For example, ID=0 represents a configuration of the measurement set, ID=1 represents a configuration of the prediction set; or ID being an odd number represents a configuration of the measurement set, and ID being an even number represents a configuration of the prediction set.

In case that the measurement set is a subset of the prediction set, only the prediction set may be configured with RS, and the RS configuration may include a second RS configuration belonging to the prediction set and a measurement set pattern, and the measurement set pattern is used to indicate a first RS configuration belonging to the measurement set in the prediction set.

In an embodiment, the measurement set pattern contains one or more of the following.
(1) A first pattern, where the first pattern is used to indicate whether each second RS configuration belonging to the prediction set belongs to the measurement set.

In an embodiment, the first pattern may be used to indicate whether each second RS configuration belonging to the prediction set belongs to the measurement set, to indicate the first RS configuration belonging to the measurement set in the prediction set.

In an implementation, the first pattern may be an added 1 bit in each RS resource configuration. For example, when the bit = 1, it indicates that the RS belongs to both the prediction set and the measurement set; when the bit = 0, it indicates that the RS belongs only to the prediction set.

In an implementation, the first pattern may be a string or a bitmap equal to a quantity of RS resource configurations. For example, when a bit at the corresponding position is 1, it indicates that the RS belongs to both the prediction set and the measurement set; when a bit at the corresponding position is 0, it indicates that the RS belongs only to the prediction set. 01011 may then indicate that a 2nd, 4th, and 5th RS in the prediction set are the measurement set.

(2) A second pattern, where the second pattern is used to indicate an RS identification corresponding to an RS configuration belonging to the measurement set.

In an embodiment, the second pattern may be used to indicate an RS identification corresponding to an RS configuration belonging to the measurement set, to indicate the first RS configuration belonging to the measurement set in the prediction set.

For example, the second pattern is: {2, 4, 6, 8}, which may indicate that a 2nd, 4th, 6th, and 8th RS in the prediction set are the measurement set.

(3) A third pattern, where the third pattern is used to indicate an arrangement rule of RS sequence numbers satisfied by RS configurations belonging to the measurement set.

In an embodiment, the third pattern may be used to indicate an arrangement rule of RS sequence numbers satisfied by RS configurations belonging to the measurement set, to indicate the first RS configuration belonging to the measurement set in the prediction set.

For example, the third pattern may be configured as: RSs with even sequence numbers in the prediction set are the measurement set. Different rules may be represented by a string, for example, 2 bits may represent 4 rules.

(4) A fourth pattern, where the fourth pattern is used to indicate a beam identification corresponding to an RS configuration belonging to the measurement set.

In an embodiment, in case that a corresponding beam ID is configured for each RS in the prediction set, the fourth pattern may be used to indicate beam sequence number satisfied by the RS configuration belonging to the measurement set, to indicate the first RS configuration belonging to the measurement set in the prediction set.

For example, the fourth pattern is: {2, 4, 6, 8}, which may indicate that a 2nd, 4th, 6th, and 8th downlink beams in the prediction set are the measurement set.

(5) A fifth pattern, where the fifth pattern is used to indicate an arrangement rule of beam sequence numbers satisfied by RS configurations belonging to the measurement set.

In an embodiment, in case that a corresponding beam ID is configured for each RS in the prediction set, the fifth pattern may be used to indicate an arrangement rule of beam sequence numbers satisfied by RS configurations belonging to the measurement set, to indicate the first RS configuration belonging to the measurement set in the prediction set.

For example, the fifth pattern may be configured as: downlink beams with even sequence numbers in the prediction set are the measurement set. Different rules may be represented by a string. For example, 2 bits may represent 4 rules.

In case that the measurement set is a subset of the prediction set, a way of measurement set pattern indication may be used when the RS is configured, to save the bit overhead for configuration.

In an embodiment, the method further includes:
receiving second information transmitted from the UE; and
determining the target downlink beam for information transmission with the UE based on the second information and a mapping relationship between a beam identification and a physical beam.

In an embodiment, after predicting one or more target downlink beams, the UE may transmit second information to the network device, where the second information is used to inform the network device of the result of the one or more target downlink beams predicted by the UE.

After receiving the second information transmitted from the UE, the network device may learn the one or more target downlink beams predicted by the UE based on the first information and the second information, and then the UE and the network device may perform information transmission on the target downlink beam (i.e., best beam), to improve the transmission performance of the system.

The second information contains one or more of the following.
(1) A beam identification corresponding to the target downlink beam.

The second information may include a beam identification (ID) corresponding to the target downlink beam, and the network device may learn the target downlink beam predicted by the UE through the AI/ML model based on the beam ID corresponding to the target downlink beam.

A mapping relationship between the beam ID and the physical beam is known to the network device since the first information is defined by the network device or defined by a third-party device but known to the network device. That is, the beam ID corresponding to one or more target downlink beams predicted by the AI/ML model trained or updated by the UE using the first information may be identified by the network device and may correspond to the actual physical target downlink beam. The UE and the network device may subsequently communicate using the target downlink beam.

In an embodiment, the UE predicts only one target downlink beam through the AI/ML model, and the UE may transmit a beam ID corresponding to the target downlink beam to the network device.

In an embodiment, the UE predicts multiple target downlink beams through the AI/ML model, and the UE may select one of the target downlink beams and transmit the beam ID corresponding to the selected target downlink beam to the network device; or, the UE may transmit the beam IDs corresponding to multiple target downlink beams to the network device, and the network selects one of the beam IDs.

(2) An RS identification corresponding to the target downlink beam.

The second information may include an RS ID corresponding to the target downlink beam, the network device may learn, based on the RS ID corresponding to the target downlink beam, the target downlink beam predicted by the UE through the AI/ML model.

A mapping relationship between the RS ID and the physical beam is known to the network device since the first information is defined by the network device or defined by a third-party device but known to the network device. That is, the RS ID corresponding to one or more target downlink beams predicted by the AI/ML model trained or updated by the UE using the first information may be identified by the network device and may correspond to the actual physical target downlink beam. The UE and the network device may subsequently communicate using the target downlink beam.

In an embodiment, the UE predicts only one target downlink beam through the AI/ML model, and the UE may transmit an RS ID corresponding to the target downlink beam to the network device.

In an embodiment, the UE predicts multiple target downlink beams through the AI/ML model, and the UE may select one of the target downlink beams and transmit the RS ID corresponding to the selected target downlink beam to the network device; or, the UE may transmit the RS IDs corresponding to multiple target downlink beams to the network device, and the network selects one of the RS IDs.

(3) An identification of the AI/ML model used to predict the target downlink beam.

Each model may correspond to a model ID in case that multiple different AI/ML models are obtained after being trained or updated. In this case, the UE not only needs to transmit the beam ID or RS ID corresponding to the predicted target downlink beam, but also needs to transmit the model ID corresponding to the predicted target downlink beam, and the network device may know, based on the model ID, which AI/ML model the UE uses to predict the target downlink beam.

(4) Identifications of RS configurations used to predict the target downlink beam.

The second information may include the identifications of the RS configurations used to predict the target downlink beam in case that there are multiple different RS configurations used for training or updating to obtain multiple different AI/ML models, and then the network device may know, based on the identifications of the RS configurations used to predict the target downlink beam, which AI/ML model the UE uses to predict the target downlink beam.

For example, if the RS configurations are in one-to-one correspondence with the trained or updated models, the UE may transmit the identifications of the RS configurations, which represent the above-mentioned model IDs. The network device may know, based on the identifications of the RS configurations, a mapping relationship between the RS IDs output by the model used by the UE and the physical beams.

(5) Information on a quantity of input beams and a quantity of output beams for the AI/ML model used to predict the target downlink beam.

The second information may include information on the quantity of input beams and the quantity of output beams for the AI/ML model used to predict the target downlink beam in case that multiple different AI/ML models are trained or updated, and the quantity of input beams and the quantity of output beams for each AI/ML model is different, and then the network device may know, based on the information on the quantity of input beams and the quantity of output beams used to predict the target downlink beam, which AI/ML model the first communication device uses to predict the target downlink beam.

The quantity of input beams may be the quantity of input Tx beams for the model, or the quantity of input Rx beams for the model, or the quantity of input beam pairs for the model, etc.; the quantity of output beams may be the quantity of output Tx beams for the model, or the quantity of output Rx beams for the model, or the quantity of output beam pairs for the model, etc.

For example, if the UE trains or updates based on each pair of {quantity of input beams, quantity of output beams} to obtain an AI/ML model, then the information of the pair of {quantity of input beams, quantity of output beams} may represent the model. That is, the information of the pair of {quantity of input beams, quantity of output beams} transmitted from the UE may correspond to the model ID, and the network device may know, based on the information of the pair of {quantity of input beams, quantity of output beams}, a mapping relationship between the beam ID or RS ID output by the model used by the UE and the physical beam.

The methods provided in the embodiments of the present application are based on the same concept, and the implementation of each method may refer to each other. The same parts are not repeated.

The methods provided in the above embodiments of the present application are illustrated below by examples under specific application scenarios.

Embodiment 1: UE trains or updates AI/ML model based on a dataset.

Step 1: UE receives one or more datasets.

The one or more datasets may be transmitted from a base station or a third-party device.

The one or more datasets include: a dataset identification, one or more dataset samples.
the dataset samples contain: multiple beam IDs, and reference signal received powers (RSRPs) of beams corresponding to the beam IDs (as inputs for training, updating or fine-tuning an AI/ML model), and one or more best beam IDs (as output labels for training, updating or fine-tuning the AI/ML model).

Different beam IDs actually correspond to different physical beams (i.e., actually transmitted beams).

The beam here may be a beam pair, or a Tx beam, or an Rx beam.

Step 2: UE trains, updates or fine-tunes AI/ML model based on the datasets to obtain corresponding AI/ML model.

Different AI/ML models may be obtained if UE uses different datasets for training, updating or fine-tuning. Different datasets may be targeted at different application scenarios, or base station configurations, or AI functions.

The application scenario includes: urban, rural, indoor, outdoor, highway, high-speed rail, Uma, Umi, etc.; the base station configurations include: base station antenna configuration, beam configuration, reference signal configuration, etc.; the AI functions mainly include spatial-domain prediction, frequency-domain prediction, time-domain prediction, downlink beam pair prediction, downlink Tx beam prediction, downlink Rx beam prediction, etc. The spatial-domain prediction refers to measuring a small quantity of beams, or beams for other types of reference signals, and predicting the best beam among a large quantity of beams. The frequency-domain prediction refers to measuring the beams on frequency 1 and predicting the best beam among beams on frequency 2. The time-domain prediction refers to measuring the beam at a current moment and predicting the best beam at a future moment.

Step 3: The UE measures an RS transmitted on a Tx beam in a measurement set, uses the AI/ML model to predict the best beam, and infers to obtain one or more best beam IDs.

If it is a prediction for beam pair, UE uses different Rx beams to measure RS (e.g., channel state information reference signal (CSI-RS) or synchronization signal block (SSB)) on each Tx beam transmitted from the base station, and obtains RSRP corresponding to each pair of Tx beam and Rx beam. If it is a prediction for Tx beam, UE uses one Rx beam to measure RS (e.g., CSI-RS or SSB) on each Tx beam transmitted from the base station, and obtains RSRP corresponding to each Tx beam. If it is a prediction for Rx beam, UE uses different Rx beams to measure RS (e.g., CSI-RS or SSB) on a Tx beam transmitted from the base station, and obtains RSRP corresponding to each Rx beam.

The above RSRP is used as the input of the AI/ML model to infer one or more best beam IDs.

Beam ID refers to a beam ID corresponding to a Tx beam in the best beam pair for the beam pair prediction, or a beam ID corresponding to best Tx beam for the Tx beam prediction, or a beam ID corresponding to best Rx beam for the Rx beam prediction.

One or more best beams obtained by inferring may be one or more of Tx beams transmitted from the base station, or other Tx beams of the base station instead of the Tx beams transmitted from the base station.

Step 4: The UE reports the one or more best beam IDs to the base station.

If one best beam ID is inferred, the beam ID is reported to the base station. If multiple best beam IDs are inferred, one beam ID is selected and reported to the base station, or all best beam IDs are reported to the base station and the base station selects one best beam ID.

If the UE uses different datasets to train, update or fine-tune to obtain multiple AI/ML models, the UE also needs to report the model ID corresponding to the dataset to the base station. That is, the UE needs to report not only the best beam ID obtained by prediction to the base station, but also the ID of the model that predicts the best beam ID.

If the dataset is in one-to-one correspondence with the trained, updated or fine-tuned model, the UE may also report the dataset identification information, which represents the above model ID.

If the UE trains, updates or fine-tune based on each pair of {quantity of input Tx beams, quantity of output Tx beams} to obtain an AI model, then the information of the pair of {quantity of input Tx beams, quantity of output Tx beams} may represent the model. That is, the UE may report the information of the pair of {quantity of input Tx beams, quantity of output Tx beams} to represent the above model ID.

Step 5: The base station obtains the actual physical best beam based on the mapping relationship between the beam ID and the physical beam, and the base station uses the beam to communicate with the UE.

The dataset is known to the base station since the dataset is defined by the base station itself or the third party (the third party needs to inform the base station of the corresponding relationship between the beam ID in the dataset and the actual physical beam), the base station obtains the actual physical best beam based on the mapping relationship between the beam ID and the physical beam, and the base station uses the beam to communicate with the UE.

If the UE obtains multiple AI/ML models by training, updating or fine-tuning based on different datasets, the base station obtains the mapping relationship between the beam ID and the physical beam based on the model ID, or identification information of the dataset, or information of the pair of {quantity of input Tx beams, quantity of output Tx beams} reported by the UE, where the beam ID is output from the model obtained by the UE using the dataset or the pair of {quantity of input Tx beams, quantity of output Tx beams} for training, updating or fine-tuning, to obtain the actual physical best beam, and the base station uses the beam to communicate with the UE.

Embodiment 2: The UE performs training, updating or fine-tuning on the AI/ML model based on an RS configuration.

Step 1: UE receives one or more RS configurations.

The one or more RS configurations are generated by the base station and transmitted to the UE.

The RS configurations include: RS configuration on a beam for a measurement set, and RS configuration on a beam for a prediction set. The RS configuration on the beam for the measurement set, or the RS configuration on the beam for the prediction set includes RS configuration identification, RS type (CSI-RS, SSB, PT-RS, CRS, DMRS, etc.), RS transmission resources, RS ID, etc.

The beam here may be a beam pair, or a Tx beam, or an Rx beam.

In particular, for the scenario where the UE measures a part of beams and predicts all the beams, that is, the measurement set is a subset of the prediction set, the following optimization methods may be used in case of configuring the RS.

Only the RS of the prediction set is configured and the pattern of the measurement set is configured, the UE may obtain an RS configuration of the measurement set (that is, a subset of the RS configuration of the prediction set) based on the prediction set and the pattern, to save the bit overhead for configuration.

Methods for configuring the pattern of the measurement set are as follows.

Alt.1: in the RS configuration of the prediction set, 1 bit is added in each RS resource configuration. For example, when the bit = 1, it indicates that the RS belongs to both the prediction set and the measurement set; when the bit = 0, it indicates that the RS belongs only to the prediction set.

Alt.2: a measurement set pattern is configured, which includes an ID of the RS in the prediction set. For example, the pattern: {2,4,6,8} is configured, which means that the 2nd, 4th, 6th, and 8th RS in the prediction set are the measurement set.

Alt.3: a measurement set pattern is configured as an arrangement rule of RS sequence numbers in the prediction set. For example, the pattern is configured as that the RS with even numbers in the prediction set are the measurement set. Different rules may be represented by a string, for example, 2 bits may represent 4 rules.

Alt.4: a measurement set pattern including an ID of the beam in the prediction set is configured. For example, the pattern: {2,4,6,8} is configured, which means that the 2nd, 4th, 6th, and 8th beam in the prediction set are the measurement set. This method requires configuring a corresponding beam ID for each RS in the prediction set.

Alt.5: a measurement set pattern is configured as an arrangement rule of beams in the prediction set. For example, the pattern is configured as that the beams with even numbers in the prediction set are the measurement set. Different rules may be represented by a string, for example, 2 bits may represent 4 rules. This method requires configuring a corresponding beam ID for each RS in the prediction set.

Step 2: The UE measures the RS configured on the beams of the measurement set and the prediction set based on the RS configuration, and trains, updates or fine-tunes the AI/ML model based on the measurement results to obtain the corresponding AI/ML model.

If the UE performs training, updating or fine-tuning based on different RS configurations and measurement results, the UE may obtain different AI/ML models. Different RS configurations may be targeted at different application scenarios, or base station configurations, or AI functions.

The application scenario includes: urban, rural, indoor, outdoor, highway, high-speed rail, Uma, Umi, etc.; the base station configurations include: base station antenna configuration, beam configuration, reference signal configuration, etc.; the AI functions mainly include spatial-domain prediction, frequency-domain prediction, time-domain prediction, downlink beam pair prediction, downlink Tx beam prediction, downlink Rx beam prediction, etc. The spatial-domain prediction refers to measuring a small quantity of beams, or beams for other types of reference signals, and predicting the best beam among a large quantity of beams. The frequency-domain prediction refers to measuring the beams on frequency 1 and predicting the best beam among beams on frequency 2. The time-domain prediction refers to measuring the beam at a current moment and predicting the best beam at a future moment.

Step 3: The UE measures an RS transmitted on a Tx beam in the measurement set, uses the AI/ML model to predict the best beam, and infers RS IDs corresponding to one or more best beams.

If it is a prediction for beam pair, UE uses different Rx beams to measure RS (e.g., channel state information reference signal (CSI-RS) or synchronization signal block (SSB)) on each Tx beam transmitted from the base station, and obtains RSRP corresponding to each pair of Tx beam and Rx beam. If it is a prediction for Tx beam, UE uses one Rx beam to measure RS (e.g., CSI-RS or SSB) on each Tx beam transmitted from the base station, and obtains RSRP corresponding to each Tx beam. If it is a prediction for Rx beam, UE uses different Rx beams to measure RS (e.g., CSI-RS or SSB) on a Tx beam transmitted from the base station, and obtains RSRP corresponding to each Rx beam.

The above RSRP is used as the input of the AI/ML model to infer RS IDs corresponding to one or more best beams.

RS ID refers to an RS ID configured on a Tx beam in the best beam pair for the beam pair prediction, or an RS ID configured on the best Tx beam for the Tx beam prediction, or an RS ID configured on the best Rx beam for the Rx beam prediction.

One or more best beams obtained by inferring may be one or more of Tx beams transmitted from the base station, or other Tx beams belonging to the base station instead of the Tx beams transmitted from the base station.

Step 4: The UE reports RS IDs corresponding to the one or more best beams to the base station.

If an RS ID corresponding to one best beam is inferred, the RS ID corresponding to one best beam is reported to the base station. If RS IDs corresponding to multiple best beams are inferred, an RS ID corresponding to one beam is selected and reported to the base station, or RS IDs corresponding to all best beams are reported to the base station and the base station selects one RS ID.

If the UE uses different RS configurations to train, update or fine-tune to obtain multiple AI/ML models, the UE also needs to report the model ID corresponding to the RS configurations to the base station. That is, the UE needs to report not only the best beam ID obtained by prediction to the base station, but also the ID of the model that predicts the best beam ID.

If the RS configurations are in one-to-one correspondence with the trained, updated or fine-tuned models, the UE may also report identification information of the RS configuration, which represents the above model ID.

If the UE trains, updates or fine-tune based on each pair of {quantity of input Tx beams, quantity of output Tx beams} to obtain an AI model, then the information of the pair of {quantity of input Tx beams, quantity of output Tx beams} may represent the model. That is, the UE may report the information of the pair of {quantity of input Tx beams, quantity of output Tx beams} to represent the above model ID.

Step 5: The base station obtains the actual physical best beam based on the mapping relationship between the RS ID and the physical beam, and the base station uses the beam to communicate with the UE.

The base station obtains the actual physical best beam based on the mapping relationship between the RS ID and the physical beam since the RS configurations are generated and configured by the base station, and the base station uses the beam to communicate with the UE.

If the UE obtains multiple AI/ML models by training, updating or fine-tuning based on different RS configurations, the base station obtains the mapping relationship between the beam ID and the physical beam based on the model ID, or identification information of the RS configuration, or information of the pair of {quantity of input Tx beams, quantity of output Tx beams} reported by the UE, where the beam ID is output from the model obtained by the UE using the RS configuration or the pair of {quantity of input Tx beams, quantity of output Tx beams} for training, updating or fine-tuning, to obtain the actual physical best beam, and the base station uses the beam to communicate with the UE.

Embodiment 3: Scenario where the measurement set is a subset of the prediction set.

Step 1: UE receives one or more RS configurations.

The one or more RS configurations are generated by the base station and transmitted to the UE.

The RS configurations include: RS configuration on a beam for a measurement set, and RS configuration on a beam for a prediction set.

The RS configuration on the beam for the measurement set, or the RS configuration on the beam for the prediction set includes RS configuration identification, RS type (CSI-RS, SSB, PT-RS, CRS, DMRS, etc.), RS transmission resources, RS ID, etc. RS ID, namely RS indication, for example, the indication of CSI-RS is CRI, and the indication of SSB is SSBRI.

The beam here may be a beam pair, or a Tx beam, or an Rx beam.

Method for RS configuration is as follows.

Only the RS of the prediction set is configured and the pattern of the measurement set is configured, the UE may obtain an RS configuration of the measurement set (that is, a subset of the RS configuration of the prediction set) based on the prediction set and the pattern, to save the bit overhead for configuration.

Methods for configuring the pattern of the measurement set are as follows.

Alt.1: in the RS configuration of the prediction set, 1 bit is added in each RS resource configuration. For example, when the bit = 1, it indicates that the RS belongs to both the prediction set and the measurement set; when the bit = 0, it indicates that the RS belongs only to the prediction set.

Alt.2: a measurement set pattern is configured, which includes an ID of the RS in the prediction set. For example, the pattern: {2,4,6,8} is configured, which means that the 2nd, 4th, 6th, and 8th RS in the prediction set are the measurement set.

Alt.3: a measurement set pattern is configured as an arrangement rule of RS sequence numbers in the prediction set. For example, the pattern is configured as that the RS with even numbers in the prediction set are the measurement set. Different rules may be represented by a string, for example, 2 bits may represent 4 rules.

Alt.4: a measurement set pattern including an ID of the beam in the prediction set is configured. For example, the pattern: {2,4,6,8} is configured, which means that the 2nd, 4th, 6th, and 8th beam in the prediction set are the measurement set. This method requires configuring a corresponding beam ID for each RS in the prediction set.

Alt.5: a measurement set pattern is configured as an arrangement rule of beams in the prediction set. For example, the pattern is configured as that the beams with even numbers in the prediction set are the measurement set. Different rules may be represented by a string, for example, 2 bits may represent 4 rules. This method requires configuring a corresponding beam ID for each RS in the prediction set.

Step 2: The UE measures the RS configured on the beams of the measurement set and the prediction set based on the RS configuration, and trains, updates or fine-tunes the AI/ML model based on the measurement results to obtain the corresponding AI/ML model.

The UE obtains the RS configuration of the measurement set based on the RS configuration of the prediction set and the pattern configuration of the measurement set and measures the RS configured on the beams of the measurement set and the prediction set.

The measurement set refers to the UE needs to measure RS transmitted on beams in the set to obtain the inputs of the AI/ML model (measurement results of the RS are used as input).

The prediction set refers to the UE needs to predict one or more best beams in the set.

During procedures of training, updating or fine-tuning the AI/ML model, the UE needs to measure the prediction set and calculate one or more best beams using a non-AI method to obtain an output label for training, updating or fine-tuning the AI/ML model.

Step 3: The UE measures an RS transmitted on a Tx beam in the measurement set, uses the AI/ML model to predict the best beam, and infers RS IDs corresponding to one or more best beams.

The UE obtains the RS configuration of the measurement set based on the RS configuration of the prediction set and the pattern configuration of the measurement set and measures the RS configured on the measurement set.

Step 4: The UE reports RS IDs corresponding to the one or more best beams to the base station.

Step 5: The base station obtains the actual physical best beam based on the mapping relationship between the RS ID and the physical beam, and the base station uses the beam to communicate with the UE.

Embodiment 4: UE performs training, updating or fine-tuning on the AI/ML model based on beam description information.

Step 1: UE receives one or more pieces of beam description information.

The one or more pieces of beam description information may be generated by a base station and transmitted to the UE, or generated by a third party and transmitted to the base station and the UE.

The beam description information contains beam ID or RS ID, and base station antenna configuration information of the beam corresponding to the beam ID or RS ID, beam angle information, and/or beam width information.

If there are multiple beams, the beams may be described separately in the form of a beam ID list.

The above beam ID may be a serial number of a Tx beam transmitted from the base station, and the RS ID may be an indication of an RS transmitted from the base station on the Tx beam, for example, the indication of CSI-RS is CRI, and the indication of SSB is SSBRI.

The beam here may be a beam pair, or a Tx beam, or an Rx beam.

Step 2: The UE measures RS configured on the Tx beam based on the beam description information and performs training, updating or fine-tuning on the AI/ML model based on the measurement results to obtain the corresponding AI/ML model.

If the UE performs training, updating or fine-tuning based on different pieces of beam description information and measurement results to obtain different AI/ML models. Different pieces of beam description information may be targeted at different application scenarios, or base station configurations, or AI functions.

The application scenario includes: urban, rural, indoor, outdoor, highway, high-speed rail, Uma, Umi, etc.; the base station configurations include: base station antenna configuration, beam configuration, reference signal configuration, etc.; the AI functions mainly include spatial-domain prediction, frequency-domain prediction, time-domain prediction, downlink beam pair prediction, downlink Tx beam prediction, downlink Rx beam prediction, etc. The spatial-domain prediction refers to measuring a small quantity of beams, or beams for other types of reference signals, and predicting the best beam among a large quantity of beams. The frequency-domain prediction refers to measuring the beams on frequency 1 and predicting the best beam among beams on frequency 2. The time-domain prediction refers to measuring the beam at a current moment and predicting the best beam at a future moment.

Step 3: The UE measures an RS transmitted on a Tx beam in the measurement set, uses the AI/ML model to predict the best beam, and infers beam IDs or RS IDs corresponding to one or more best beams.

If it is a prediction for beam pair, UE uses different Rx beams to measure RS (e.g., channel state information reference signal (CSI-RS) or synchronization signal block (SSB)) on each Tx beam transmitted from the base station, and obtains RSRP corresponding to each pair of Tx beam and Rx beam. If it is a prediction for Tx beam, UE uses one Rx beam to measure RS (e.g., CSI-RS or SSB) on each Tx beam transmitted from the base station, and obtains RSRP corresponding to each Tx beam. If it is a prediction for Rx beam, UE uses different Rx beams to measure RS (e.g., CSI-RS or SSB) on a Tx beam transmitted from the base station, and obtains RSRP corresponding to each Rx beam.

The above RSRP is used as the input of the AI/ML model to infer the beam IDs or RS IDs corresponding to one or more best beams.

Beam ID or RS ID refers to a beam ID or an RS ID corresponding to a Tx beam in the best beam pair for the beam pair prediction, or a beam ID or an RS ID corresponding to best Tx beam for the Tx beam prediction, or a beam ID or an RS ID corresponding to best Rx beam for the Rx beam prediction.

One or more best beams obtained by inferring may be one or more of Tx beams transmitted from the base station, or other Tx beams belonging to the base station instead of the Tx beams transmitted from the base station.

Step 4: The UE reports beam IDs or RS IDs corresponding to the one or more best beam to the base station.

If a beam ID or an RS ID corresponding to one best beam is inferred, the beam ID or the RS ID corresponding to one best beam is reported to the base station. If beam IDs or RS IDs corresponding to multiple best beams are inferred, a beam ID or an RS ID corresponding to one beam is selected and reported to the base station, or beam IDs or RS IDs corresponding to all best beams are reported to the base station and the base station selects one beam ID or RS ID.

If the UE uses different pieces of beam description information to train, update or fine-tune to obtain multiple AI/ML models, the UE also needs to report the model ID corresponding to the beam description information to the base station. That is, the UE needs to report not only the best beam ID obtained by prediction to the base station, but also the ID of the model that predicts the best beam ID.

If the pieces of beam description information are in one-to-one correspondence with the trained, updated or fine-tuned models, the UE may also report the beam description information identification information, which represents the above model ID.

If the UE trains, updates or fine-tune based on each pair of {quantity of input Tx beams, quantity of output Tx beams} to obtain an AI model, then the information of the pair of {quantity of input Tx beams, quantity of output Tx beams} may represent the model. That is, the UE may report the information of the pair of {quantity of input Tx beams, quantity of output Tx beams} to represent the above model ID.

Step 5: The base station obtains the actual physical best beam based on the mapping relationship between the beam ID or RS ID and the physical beam, and the base station uses the beam to communicate with the UE.

The base station obtains the actual physical best beam based on the mapping relationship between the beam ID or RS ID and the physical beam since the beam description information are generated by the base station or a third party and transmitted to the base station and the UE, and the base station uses the beam to communicate with the UE.

If the UE obtains multiple AI/ML models by training, updating or fine-tuning based on different pieces of beam description information, the base station obtains the mapping relationship between the beam ID and the physical beam based on the model ID, or identification information of the beam description information, or information of the pair of {quantity of input Tx beams, quantity of output Tx beams} reported by the UE, where the beam ID is output from the model obtained by the UE using the beam description information or the pair of {quantity of input Tx beams, quantity of output Tx beams} for training, updating or fine-tuning, to obtain the actual physical best beam, and the base station uses the beam to communicate with the UE.

Embodiment 5: A base station trains or updates AI/ML model based on a dataset.

Step 1: The base station receives one or more datasets.

The one or more datasets may be transmitted from a user equipment (UE) or a third-party device.

The one or more datasets include: a dataset identification, one or more dataset samples.

the dataset samples contain: multiple beam IDs, and reference signal received power (RSRPs) of beams corresponding to the beam IDs (as inputs for training, updating or fine-tuning an AI/ML model), and one or more best beam IDs (as output labels for training, updating or fine-tuning the AI/ML model).

Different beam IDs actually correspond to different physical beams (i.e., actually transmitted beams).

The beam here may be a beam pair, or a Tx beam, or an Rx beam.

Step 2: The base station trains, updates or fine-tunes AI/ML model based on the datasets to obtain corresponding AI/ML model.

Different AI/ML models may be obtained if the base station uses different datasets for training, updating or fine-tuning. Different datasets may be targeted at different application scenarios, or base station configurations, or AI functions.

The application scenario includes: urban, rural, indoor, outdoor, highway, high-speed rail, Uma, Umi, etc.; the base station configurations include: base station antenna configuration, beam configuration, reference signal configuration, etc.; the AI functions mainly include spatial-domain prediction, frequency-domain prediction, time-domain prediction, downlink beam pair prediction, downlink Tx beam prediction, downlink Rx beam prediction, etc. The spatial-domain prediction refers to measuring a small quantity of beams, or beams for other types of reference signals, and predicting the best beam among a large quantity of beams. The frequency-domain prediction refers to measuring the beams on frequency 1 and predicting the best beam among beams on frequency 2. The time-domain prediction refers to measuring the beam at a current moment and predicting the best beam at a future moment.

Step 3: The UE measures an RS received on a Tx beam in a measurement set, and then feeds back measurement results to the base station. The base station uses the AI/ML model to predict the best beam, and infers to obtain one or more best beam IDs.

If it is a prediction for beam pair, UE uses different Rx beams to measure RS (e.g., channel state information reference signal (CSI-RS) or synchronization signal block (SSB)) on each Tx beam transmitted from the base station, and obtains RSRP corresponding to each pair of Tx beam and Rx beam. If it is a prediction for Tx beam, UE uses one Rx beam to measure RS (e.g., CSI-RS or SSB) on each Tx beam transmitted from the base station, and obtains RSRP corresponding to each Tx beam. If it is a prediction for Rx beam, UE uses different Rx beams to measure RS (e.g., CSI-RS or SSB) on a Tx beam transmitted from the base station, and obtains RSRP corresponding to each Rx beam.

UE reports the measurement results to the base station, and the base station uses the AI/ML model to perform beam prediction.

The above RSRP is used as the input of the AI/ML model to infer one or more best beam IDs.

Beam ID refers to a beam ID corresponding to an Rx beam in the best beam pair for the beam pair prediction, or a beam ID corresponding to best Rx beam for the Rx beam prediction, or a beam ID corresponding to best Rx beam for the Rx beam prediction.

One or more best beams obtained by inferring may be one or more of UE received Rx beams, or other Rx beams of the UE instead of the UE received Rx beams.

Step 4: The base station transmits the one or more best beam IDs to the UE.

If one best beam ID is inferred, the beam ID is transmitted to the UE. If multiple best beam IDs are inferred, one beam ID is selected and transmitted to the UE, or all best beam IDs are transmitted to the UE and the UE selects one best beam ID.

If the base station uses different datasets to train, update or fine-tune to obtain multiple AI/ML models, the base station also needs to transmit the model ID corresponding to the dataset to the UE. That is, the base station needs to transmit not only the best beam ID obtained by prediction to the UE, but also the ID of the model that predicts the best beam ID.

If the dataset is in one-to-one correspondence with the trained, updated or fine-tuned model, the base station may also transmit the dataset identification information, which represents the above model ID.

If the base station trains, updates or fine-tune based on each pair of {quantity of input Tx beams, quantity of output Tx beams} to obtain an AI model, then the information of the pair of {quantity of input Tx beams, quantity of output Tx beams} may represent the model. That is, the base station may transmit the information of the pair of {quantity of input Tx beams, quantity of output Tx beams} to represent the above model ID.

Step 5: The UE obtains the actual physical best beam based on the mapping relationship between the beam ID and the physical beam, and the UE uses the beam to communicate with the base station.

The dataset is known to the UE since the dataset is defined by the UE itself or the third party (the third party needs to inform the UE of the corresponding relationship between the beam ID in the dataset and the actual physical beam), the UE obtains the actual physical best beam based on the mapping relationship between the beam ID and the physical beam, and the UE uses the beam to communicate with the base station.

If the base station obtains multiple AI/ML models by training, updating or fine-tuning based on different datasets, the UE obtains the mapping relationship between the beam ID and the physical beam based on the model ID, or identification information of the dataset, or information of the pair of {quantity of input Tx beams, quantity of output Tx beams} transmitted from the base station, where the beam ID is output from the model obtained by the base station using the dataset or the pair of {quantity of input Tx beams, quantity of output Tx beams} for training, updating or fine-tuning, to obtain the actual physical best beam, and the UE uses the beam to communicate with the base station.

Embodiment 6: a base station performs training, updating or fine-tuning on the AI/ML model based on beam description information.

Step 1: The base station receives one or more pieces of beam description information.

The one or more pieces of beam description information may be generated by a user equipment (UE) and transmitted to the base station, or generated by a third party and transmitted to the UE and the base station.

The beam description information contains beam ID or RS ID, and UE antenna configuration information of the beam corresponding to the beam ID or RS ID, beam angle information, and/or beam width information.

If there are multiple beams, the beams may be described separately in the form of a beam ID list.

The above beam ID may be a serial number of UE received Rx beam, and the RS ID may be an indication of an RS received by the UE on the Rx beam, for example, the indication of CSI-RS is CRI, and the indication of SSB is SSBRI.

The beam here may be a beam pair, or a Tx beam, or an Rx beam.

Step 2: The base station measures RS configured on the Rx beam based on the beam description information and performs training, updating or fine-tuning on the AI/ML model based on the measurement results to obtain the corresponding AI/ML model.

If the base station performs training, updating or fine-tuning based on different pieces of beam description information and measurement results to obtain different AI/ML models. Different pieces of beam description information may be targeted at different application scenarios, or base station configurations, or AI functions.

The application scenario includes: urban, rural, indoor, outdoor, highway, high-speed rail, Uma, Umi, etc.; the base station configurations include: base station antenna configuration, beam configuration, reference signal configuration, etc.; the AI functions mainly include spatial-domain prediction, frequency-domain prediction, time-domain prediction, downlink beam pair prediction, downlink Tx beam prediction, downlink Rx beam prediction, etc. The spatial-domain prediction refers to measuring a small quantity of beams, or beams for other types of reference signals, and predicting the best beam among a large quantity of beams. The frequency-domain prediction refers to measuring the beams on frequency 1 and predicting the best beam among beams on frequency 2. The time-domain prediction refers to measuring the beam at a current moment and predicting the best beam at a future moment.

Step 3: The UE measures an RS transmitted on a Tx beam in the measurement set, and then feeds back measurement results to the base station. The base station uses the AI/ML model to predict the best beam, and infers to obtain a beam ID or an RS ID corresponding to one or more best beams.

If it is a prediction for beam pair, UE uses different Rx beams to measure RS (e.g., channel state information reference signal (CSI-RS) or synchronization signal block (SSB)) on each Tx beam transmitted from the base station, and obtains RSRP corresponding to each pair of Tx beam and Rx beam. If it is a prediction for Tx beam, UE uses one Rx beam to measure RS (e.g., CSI-RS or SSB) on each Tx beam transmitted from the base station, and obtains RSRP corresponding to each Tx beam. If it is a prediction for Rx beam, UE uses different Rx beams to measure RS (e.g., CSI-RS or SSB) on a Tx beam transmitted from the base station, and obtains RSRP corresponding to each Rx beam.

UE reports the measurement results to the base station, and the base station uses the AI/ML model to perform beam prediction.

The above RSRP is used as the input of the AI/ML model to infer the beam IDs or RS IDs corresponding to one or more best beams.

Beam ID or RS ID refers to a beam ID or an RS ID corresponding to an Rx beam in the best beam pair for the beam pair prediction, or a beam ID or an RS ID corresponding to best Rx beam for the Tx beam prediction, or a beam ID or an RS ID corresponding to best Rx beam for the Rx beam prediction.

One or more best beams obtained by inferring may be one or more of UE received Rx beams, or other Rx beams of the UE instead of the UE received Rx beams.

Step 4: The base station transmits beam IDs or RS IDs corresponding to the one or more best beam to the UE.

If a beam ID or an RS ID corresponding to one best beam is inferred, the beam ID or the RS ID corresponding to one best beam is transmitted to the UE. If beam IDs or RS IDs corresponding to multiple best beams are inferred, a beam ID or an RS ID corresponding to one beam is selected and transmitted to the UE, or beam IDs or RS IDs corresponding to all best beams are transmitted to the UE and the UE selects one beam ID or RS ID.

If the base station uses different pieces of beam description information to train, update or fine-tune to obtain multiple AI/ML models, the base station also needs to transmit the model ID corresponding to the beam description information to the UE. That is, the base station needs to transmit not only the best beam ID obtained by prediction to the UE, but also the ID of the model that predicts the best beam ID.

If the pieces of beam description information are in one-to-one correspondence with the trained, updated or fine-tuned models, the base station may also transmit the beam description information identification information, which represents the above model ID.

If the base station trains, updates or fine-tune based on each pair of {quantity of input Tx beams, quantity of output Tx beams} to obtain an AI model, then the information of the pair of {quantity of input Tx beams, quantity of output Tx beams} may represent the model. That is, the base station may transmit the information of the pair of {quantity of input Tx beams, quantity of output Tx beams} to represent the above model ID.

Step 5: The UE obtains the actual physical best beam based on the mapping relationship between the beam ID or the RS ID and the physical beam, and the UE uses the beam to communicate with the base station.

The UE obtains the actual physical best beam based on the mapping relationship between the beam ID or RS ID and the physical beam since the beam description information are generated by the UE or a third party and transmitted to the UE and the base station, and the UE uses the beam to communicate with the base station.

If the base station obtains multiple AI/ML models by training, updating or fine-tuning based on different pieces of beam description information, the UE obtains the mapping relationship between the beam ID and the physical beam based on the model ID, or identification information of the beam description information, or information of the pair of {quantity of input Tx beams, quantity of output Tx beams} transmitted from the base station, where the beam ID is output from the model obtained by the base station using the beam description information or the pair of {quantity of input Tx beams, quantity of output Tx beams} for training, updating or fine-tuning, to obtain the actual physical best beam, and the UE uses the beam to communicate with the base station.

The methods and the devices provided in the embodiments of the present application are based on the same concept, and the implementation of the devices and the methods may be referred to each other since the principles for solving the problems of the methods and the devices are similar, the similar parts are not repeated.

FIG. 5 is a schematic structural diagram of a first communication device according to an embodiment of the present application. As shown in FIG. 5, the first communication device includes a memory 520, a transceiver 510, and a processor 500, where the processor 500 and the memory 520 may also be arranged physically separately.

The memory 520 is used for storing a computer program, the transceiver 510 is used for receiving and transmitting data under control of the processor 500.

The transceiver 510 is used for receiving and transmitting data under control of the processor 500.

In FIG. 5, a bus architecture may include any number of interconnected buses and bridges, which are linked together through various circuits of one or more processors represented by the processor 500 and one or more memories represented by the memory 520. The bus architecture may also link together various other circuits, such as peripherals, voltage regulators, and power management circuits, which are well known in the art, and therefore are not further described in the present application. The bus interface provides an interface. The transceiver 510 may include multiple elements, i.e., include a transmitter and a receiver, units for providing communication with various other devices over transmission media including wireless channels, wired channels, fiber optic cables, and the like.

The processor 500 is responsible for managing the bus architecture and general processing, and the memory 520 may store data used by the processor 500 when performing operations.

The processor 500 may be a central processing unit (CPU), an application specific integrated circuit (ASIC), a field-programmable gate array (FPGA), or a complex programmable logic device (CPLD), and the processor may also use a multi-core architecture.

The processor 500 performs any of the methods performed by the first communication device in the embodiments of the present application when executing the executable instructions by calling the computer program stored in the memory 520. The method includes:
receiving first information, where the first information contains one or more of a dataset, a reference signal (RS) configuration, or beam description information;
training or updating an artificial intelligence (AI) or machine learning (ML) model for downlink beam prediction based on the first information; and
predicting one or more target downlink beams based on a trained or updated AI/ML model, where the target downlink beams are used for information transmission between the first communication device and a second communication device.

In an embodiment, receiving the first information contains:
receiving the first information transmitted from the second communication device.

In an embodiment, the dataset contains one or more of the following:
a dataset identification; or
one or more dataset samples, where the dataset samples contain multiple beam identifications, an RS measurement result of a beam corresponding to each beam identification, and one or more beam identifications as prediction labels.

In an embodiment, the RS configuration contains one or more of the following:
an RS configuration identification;
a first RS configuration belonging to a measurement set;
a second RS configuration belonging to a prediction set; or
a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the beam description information contains one or more of the following:
a beam identification;
an RS identification;
network device antenna configuration information;
beam angle information; or
beam width information.

In an embodiment, the first information is associated with one or more of an application scenario, a network device configuration, or a model function.

In an embodiment, after predicting the one or more target downlink beams, the method further includes:
transmitting second information to the second communication device, where the second information contains one or more of the following:
a beam identification corresponding to the target downlink beam;
an RS identification corresponding to the target downlink beam;
an identification of the AI/ML model used to predict the target downlink beam;
identifications of datasets used to predict the target downlink beam;
identifications of RS configurations used to predict the target downlink beam;
an identification of beam description information used to predict the target downlink beam; or
information on a quantity of input beams and a quantity of output beams for the AI/ML model used to predict the target downlink beam.

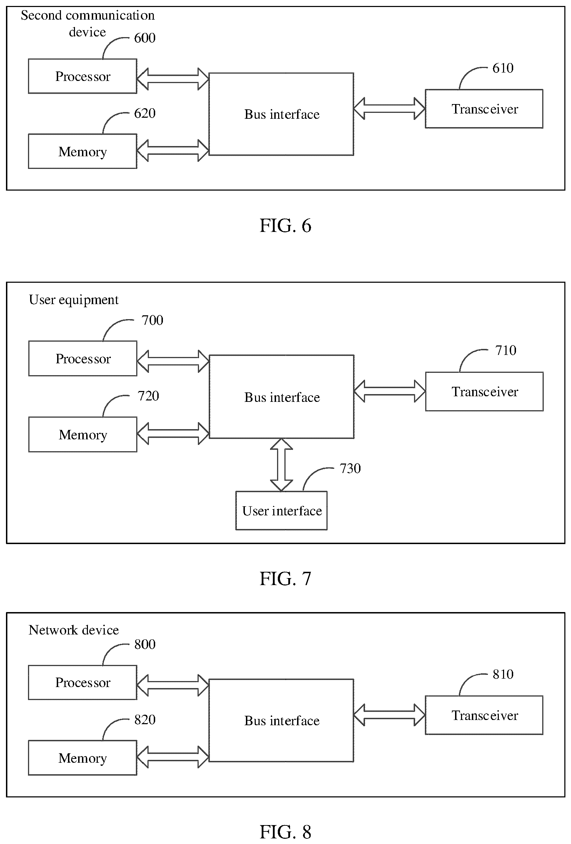

FIG. 6 is a schematic structural diagram of a second communication device according to an embodiment of the present application. As shown in FIG. 6, the second communication device includes a memory 620, a transceiver 610, and a processor 600, where the processor 600 and the memory 620 may also be arranged physically separately.

The memory 620 is used for storing a computer program, the transceiver 610 is used for receiving and transmitting data under control of the processor 600.

The transceiver 610 is used for receiving and transmitting data under control of the processor 600.

In FIG. 6, a bus architecture may include any number of interconnected buses and bridges, which are linked together through various circuits of one or more processors represented by the processor 600 and one or more memories represented by the memory 620. The bus architecture may also link together various other circuits, such as peripherals, voltage regulators, and power management circuits, which are well known in the art, and therefore are not further described in the present application. The bus interface provides an interface. The transceiver 610 may include multiple elements, i.e., include a transmitter and a receiver, units for providing communication with various other devices over transmission media including wireless channels, wired channels, fiber optic cables, and the like.

The processor 600 is responsible for managing the bus architecture and general processing, and the memory 620 may store data used by the processor 600 when performing operations.

The processor 600 may be a central processing unit (CPU), an application specific integrated circuit (ASIC), a field-programmable gate array (FPGA), or a complex programmable logic device (CPLD), and the processor may also use a multi-core architecture.

The processor 600 performs any of the methods performed by the second communication device in the embodiments of the present application when executing the executable instructions by calling the computer program stored in the memory 620. The method includes:
determining first information, where the first information contains one or more of a dataset, a reference signal (RS) configuration, or beam description information, the first information is used to train or update an artificial intelligence (AI) or machine learning (ML) model, the AI/ML model is used to predict one or more target downlink beams, and the target downlink beams are used for information transmission between the second communication device and a first communication device; and
transmitting the first information to the first communication device.

In an embodiment, the dataset contains one or more of the following:
a dataset identification; or
one or more dataset samples, where the dataset samples contain multiple beam identifications, an RS measurement result of a beam corresponding to each beam identification, and one or more beam identifications as prediction labels.

In an embodiment, the RS configuration contains one or more of the following:
an RS configuration identification;
a first RS configuration belonging to a measurement set;
a second RS configuration belonging to a prediction set; or
a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the beam description information contains one or more of the following:
a beam identification;
an RS identification;
network device antenna configuration information;
beam angle information; or
beam width information.

In an embodiment, the first information is associated with one or more of an application scenario, a network device configuration, or a model function.

In an embodiment, the method further includes:
receiving second information transmitted from the first communication device; and
determining the target downlink beam for information transmission with the first communication device based on the second information and a mapping relationship between a beam identification and a physical beam;
where the second information contains one or more of the following:
   a beam identification corresponding to the target downlink beam;
   an RS identification corresponding to the target downlink beam;
   an identification of the AI/ML model used to predict the target downlink beam;
   identifications of datasets used to predict the target downlink beam;
   identifications of RS configurations used to predict the target downlink beam;
   an identification of beam description information used to predict the target downlink beam; or
   information on a quantity of input beams and a quantity of output beams for the AI/ML model used to predict the target downlink beam.

FIG. 7 is a schematic structural diagram of a user equipment (UE) according to an embodiment of the present application. As shown in FIG. 7, the UE includes a memory 720, a transceiver 710, and a processor 700, where the processor 700 and the memory 720 may also be arranged physically separately.

The memory 720 is used for storing a computer program, the transceiver 710 is used for receiving and transmitting data under control of the processor 700.

The transceiver 710 is used for receiving and transmitting data under control of the processor 700.

In FIG. 7, a bus architecture may include any number of interconnected buses and bridges, which are linked together through various circuits of one or more processors represented by the processor 700 and one or more memories represented by the memory 720. The bus architecture may also link together various other circuits, such as peripherals, voltage regulators, and power management circuits, which are well known in the art, and therefore are not further described in the present application. The bus interface provides an interface. The transceiver 710 may include multiple elements, i.e., include a transmitter and a receiver, units for providing communication with various other devices over transmission media including wireless channels, wired channels, fiber optic cables, and the like. For different user equipment, the user interface 730 may also be an interface capable of externally or internally connecting the required equipment, and the connected equipment includes, but not limited to, a keypad, a display, a speaker, a microphone, a joystick, and the like.

The processor 700 is responsible for managing the bus architecture and general processing, and the memory 720 may store data used by the processor 700 when performing operations.

The processor 700 may be a central processing unit (CPU), an application specific integrated circuit (ASIC), a field-programmable gate array (FPGA), or a complex programmable logic device (CPLD), and the processor may also use a multi-core architecture.

The processor 700 performs any of the methods performed by the UE in the embodiments of the present application when executing the executable instructions by calling the computer program stored in the memory 720. The method includes:
receiving a reference signal (RS) configuration transmitted from a network device;
training or updating an artificial intelligence (AI) or machine learning (ML) model for downlink beam prediction based on the RS configuration; and
predicting one or more target downlink beams based on a trained or updated AI/ML model, where the target downlink beams are used for information transmission between the network device and the UE.

In an embodiment, the RS configuration contains an RS configuration identification, a second RS configuration belonging to a prediction set, and a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, after predicting the one or more target downlink beams, the method further includes:
transmitting second information to the network device, where the second information contains one or more of the following:
a beam identification corresponding to the target downlink beam;
an RS identification corresponding to the target downlink beam;
an identification of the AI/ML model used to predict the target downlink beam;
identifications of RS configurations used to predict the target downlink beam; or
information on a quantity of input beams and a quantity of output beams for the AI/ML model used to predict the target downlink beam.

FIG. 8 is a schematic structural diagram of a network device according to an embodiment of the present application. As shown in FIG. 8, the network device includes a memory 820, a transceiver 810, and a processor 800, where the processor 800 and the memory 820 may also be arranged physically separately.

The memory 820 is used for storing a computer program, the transceiver 810 is used for receiving and transmitting data under control of the processor 800.

The transceiver 810 is used for receiving and transmitting data under control of the processor 800.

In FIG. 8, a bus architecture may include any number of interconnected buses and bridges, which are linked together through various circuits of one or more processors represented by the processor 800 and one or more memories represented by the memory 820. The bus architecture may also link together various other circuits, such as peripherals, voltage regulators, and power management circuits, which are well known in the art, and therefore are not further described in the present application. The bus interface provides an interface. The transceiver 810 may include multiple elements, i.e., include a transmitter and a receiver, units for providing communication with various other devices over transmission media including wireless channels, wired channels, fiber optic cables, and the like.

The processor 800 is responsible for managing the bus architecture and general processing, and the memory 820 may store data used by the processor 800 when performing operations.

The processor 800 may be a central processing unit (CPU), an application specific integrated circuit (ASIC), a field-programmable gate array (FPGA), or a complex programmable logic device (CPLD), and the processor may also use a multi-core architecture.

The processor 800 performs any of the methods performed by the network device in the embodiments of the present application when executing the executable instructions by calling the computer program stored in the memory 820. The method includes:
determining a reference signal (RS) configuration, where the RS configuration is used to train or update an artificial intelligence (AI) or machine learning (ML) model, the AI/ML model is used to predict one or more target downlink beams, and the target downlink beams are used for information transmission between the network device and a user equipment (UE); and
transmitting the RS configuration to the UE.

In an embodiment, the RS configuration contains an RS configuration identification, a second RS configuration belonging to a prediction set, and a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the method further includes:
receiving second information transmitted from the UE; and
determining the target downlink beam for information transmission with the UE based on the second information and a mapping relationship between a beam identification and a physical beam;
where the second information contains one or more of the following:
   a beam identification corresponding to the target downlink beam;
   an RS identification corresponding to the target downlink beam;
   an identification of the AI/ML model used to predict the target downlink beam;
   identifications of RS configurations used to predict the target downlink beam; or
   information on a quantity of input beams and a quantity of output beams for the AI/ML model used to predict the target downlink beam.

It should be noted here that the above-mentioned first communication device, the second communication device, the UE and the network device according to the embodiments of the present application may implement all the corresponding method steps implemented by the above-mentioned method embodiments, and may achieve the same effect. The same parts and beneficial effects as the same method embodiments are not repeated here.

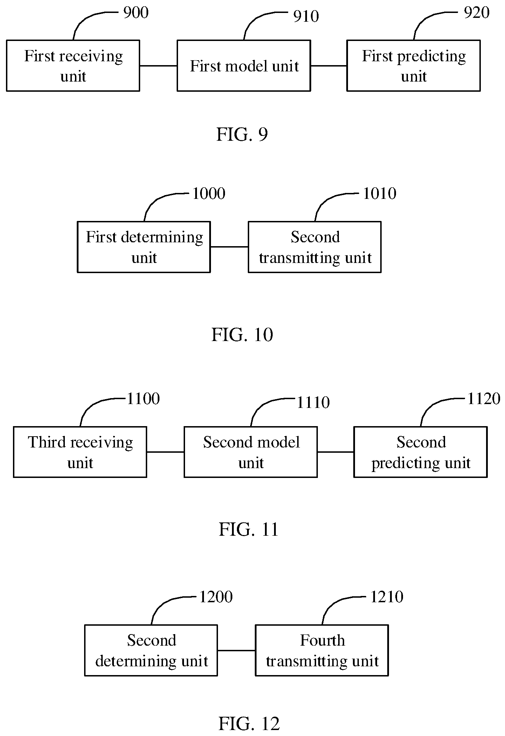

FIG. 9 is a first schematic structural diagram of an apparatus for downlink beam prediction according to an embodiment of the present application. The apparatus is for use in a first communication device. As shown in FIG. 9, the apparatus includes:
a first receiving unit 900, used for receiving first information, where the first information contains one or more of a dataset, a reference signal (RS) configuration, or beam description information;
a first model unit 910, used for training or updating an artificial intelligence (AI) or machine learning (ML) model for downlink beam prediction based on the first information; and
a first predicting unit 920, used for predicting one or more target downlink beams based on a trained or updated AI/ML model, where the target downlink beams are used for information transmission between the first communication device and a second communication device.

In an embodiment, receiving the first information contains:
receiving the first information transmitted from the second communication device.

In an embodiment, the dataset contains one or more of the following:
a dataset identification; or
one or more dataset samples, where the dataset samples contain multiple beam identifications, an RS measurement result of a beam corresponding to each beam identification, and one or more beam identifications as prediction labels.

In an embodiment, the RS configuration contains one or more of the following:
an RS configuration identification;
a first RS configuration belonging to a measurement set;
a second RS configuration belonging to a prediction set; or
a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the beam description information contains one or more of the following:
a beam identification;
an RS identification;
network device antenna configuration information;
beam angle information; or
beam width information.

In an embodiment, the first information is associated with one or more of an application scenario, a network device configuration, or a model function.

In an embodiment, the apparatus further includes a first transmitting unit, used for transmitting second information to the second communication device, where the second information contains one or more of the following:
a beam identification corresponding to the target downlink beam;
an RS identification corresponding to the target downlink beam;
an identification of the AI/ML model used to predict the target downlink beam;
identifications of datasets used to predict the target downlink beam;
identifications of RS configurations used to predict the target downlink beam;
an identification of beam description information used to predict the target downlink beam; or
information on a quantity of input beams and a quantity of output beams for the AI/ML model used to predict the target downlink beam.

FIG. 10 is a second schematic structural diagram of an apparatus for downlink beam prediction according to an embodiment of the present application. The apparatus is for use in a second communication device. As shown in FIG. 10, the apparatus includes:
a first determining unit 1000, used for determining first information, where the first information contains one or more of a dataset, a reference signal (RS) configuration, or beam description information, the first information is used to train or update an artificial intelligence (AI) or machine learning (ML) model, the AI/ML model is used to predict one or more target downlink beams, and the target downlink beams are used for information transmission between the second communication device and a first communication device; and
a second transmitting unit 1010, used for transmitting the first information to the first communication device.

In an embodiment, the dataset contains one or more of the following:
a dataset identification; or
one or more dataset samples, where the dataset samples contain multiple beam identifications, an RS measurement result of a beam corresponding to each beam identification, and one or more beam identifications as prediction labels.

In an embodiment, the RS configuration contains one or more of the following:
an RS configuration identification;
a first RS configuration belonging to a measurement set;
a second RS configuration belonging to a prediction set; or
a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the beam description information contains one or more of the following:
a beam identification;
an RS identification;
network device antenna configuration information;
beam angle information; or
beam width information.

In an embodiment, the first information is associated with one or more of an application scenario, a network device configuration, or a model function.

In an embodiment, the apparatus further includes a second receiving unit, used for receiving second information transmitted from the first communication device; and
the first determining unit 1000 is further used for determining the target downlink beam for information transmission with the first communication device based on the second information and a mapping relationship between a beam identification and a physical beam;
where the second information contains one or more of the following:
   a beam identification corresponding to the target downlink beam;
   an RS identification corresponding to the target downlink beam;
   an identification of the AI/ML model used to predict the target downlink beam;
   identifications of datasets used to predict the target downlink beam;
   identifications of RS configurations used to predict the target downlink beam;
   an identification of beam description information used to predict the target downlink beam; or
   information on a quantity of input beams and a quantity of output beams for the AI/ML model used to predict the target downlink beam.

FIG. 11 is a third schematic structural diagram of an apparatus for downlink beam prediction according to an embodiment of the present application. The apparatus is for use in a user equipment (UE). As shown in FIG. 11, the apparatus includes:
a third receiving unit 1100, used for receiving a reference signal (RS) configuration transmitted from a network device;
a second model unit 1110, used for training or updating an artificial intelligence (AI) or machine learning (ML) model for downlink beam prediction based on the RS configuration; and
a second predicting unit 1120, used for predicting one or more target downlink beams based on a trained or updated AI/ML model, where the target downlink beams are used for information transmission between the network device and the UE.

In an embodiment, the RS configuration contains an RS configuration identification, a second RS configuration belonging to a prediction set, and a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the apparatus further includes a third transmitting unit, used for transmitting second information to a network device, where the second information contains one or more of the following:
a beam identification corresponding to the target downlink beam;
an RS identification corresponding to the target downlink beam;
an identification of the AI/ML model used to predict the target downlink beam;
identifications of RS configurations used to predict the target downlink beam; or
information on a quantity of input beams and a quantity of output beams for the AI/ML model used to predict the target downlink beam.

FIG. 12 is a fourth schematic structural diagram of an apparatus for downlink beam prediction according to an embodiment of the present application. The apparatus is for use in a network device. As shown in FIG. 12, the apparatus includes:
a second determining unit 1200, used for determining a reference signal (RS) configuration, where the RS configuration is used to train or update an artificial intelligence (AI) or machine learning (ML) model, the AI/ML model is used to predict one or more target downlink beams, and the target downlink beams are used for information transmission between the network device and a user equipment (UE); and
a fourth transmitting unit 1210, used for transmitting the RS configuration to the UE.

In an embodiment, the RS configuration contains an RS configuration identification, a second RS configuration belonging to a prediction set, and a measurement set pattern, where the measurement set pattern is used to indicate a first RS configuration belonging to a measurement set;
where the first RS configuration is used to obtain RS measurement results as inputs of the model; and the second RS configuration is used to determine one or more downlink beams as prediction labels.

In an embodiment, the measurement set pattern contains one or more of the following:
a first pattern, where the first pattern is used to indicate whether each second RS configuration belonging to the prediction set belongs to the measurement set;
a second pattern, where the second pattern is used to indicate an RS identification corresponding to an RS configuration belonging to the measurement set;
a third pattern, where the third pattern is used to indicate an arrangement rule of RS sequence numbers satisfied by RS configurations belonging to the measurement set;
a fourth pattern, where the fourth pattern is used to indicate a beam identification corresponding to an RS configuration belonging to the measurement set; or
a fifth pattern, where the fifth pattern is used to indicate an arrangement rule of beam sequence numbers satisfied by RS configurations belonging to the measurement set.

In an embodiment, the apparatus further includes a fourth receiving unit, used for receiving second information transmitted from the UE; and
the second determining unit 1200 is further used for determining the target downlink beam for information transmission with the UE based on the second information and a mapping relationship between a beam identification and a physical beam;
where the second information contains one or more of the following:
   a beam identification corresponding to the target downlink beam;
   an RS identification corresponding to the target downlink beam;
   an identification of the AI/ML model used to predict the target downlink beam;
   identifications of RS configurations used to predict the target downlink beam; or
   information on a quantity of input beams and a quantity of output beams for the AI/ML model used to predict the target downlink beam.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or a compact disk.

It should be noted here that the above-mentioned apparatus according to the embodiments of the present application may implement all the method steps implemented by the above-mentioned method embodiments, and may achieve the same effect. The same parts and beneficial effects as the same method embodiments are not repeated here.

An embodiment of the present application further provides a computer-readable storage medium, where the computer-readable storage medium stores a computer program and the computer program causes a computer to perform any of the methods for downlink beam prediction described above.

It should be noted here that the above-mentioned computer-readable storage medium according to the embodiments of the present application may implement all the method steps implemented by the above-mentioned method embodiments, and may achieve the same effect. The same parts and beneficial effects as the same method embodiments are not repeated here.

The computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

The solutions according to the embodiments of the present application may be applicable to various systems, especially a 5G system. For example, applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal in the embodiments of the present application may be a device that provides voice and/or data connectivity to a user, a handheld device with a wireless connection function, or other processing device connected to a wireless modem. In different systems, the names of the terminal may be different. For example, in the 5G system, the terminal may be called as user equipment (UE). A wireless terminal may communicate with one or more core networks (CN) via a radio access network (RAN), and the wireless terminal may be a mobile terminal, such as a mobile phone (or cellular phone) and a computer with mobile terminal, e.g., a portable mobile device, a pocket-sized mobile device, a hand-held mobile device, a computer-built mobile device or a vehicle-mounted mobile device, which exchanges language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. Network device may be used to exchange received air frames with Internet Protocol (IP) packets, and act as a router between radio terminal and the rest of the access network, and the rest of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. Each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for downlink beam prediction, performed by a first communication device, comprising:
receiving first information, wherein the first information contains one or more of a dataset, a reference signal, RS, configuration, or beam description information;
training or updating an artificial intelligence, AI, or machine learning, ML, model for downlink beam prediction based on the first information; and
predicting one or more target downlink beams based on a trained or updated AI/ML model, wherein the target downlink beams are used for information transmission between the first communication device and a second communication device.

2. The method of claim 1, wherein receiving the first information contains:
receiving the first information transmitted from the second communication device.

3. The method of claim 1 or 2, wherein the dataset contains one or more of the following:
a dataset identification; or
one or more dataset samples, wherein the dataset samples contain multiple beam identifications, an RS measurement result of a beam corresponding to each beam identification, and one or more beam identifications as prediction labels.

4. The method of claim 1 or 2, wherein the RS configuration contains one or more of the following:
an RS configuration identification;
a first RS configuration belonging to a measurement set;
a second RS configuration belonging to a prediction set; or
a measurement set pattern, wherein the measurement set pattern is used to indicate a first RS configuration belonging to a measurement set;
wherein the first RS configuration is used to obtain RS measurement results as inputs of the model; and the second RS configuration is used to determine one or more downlink beams as prediction labels.

5. The method of claim 4, wherein the measurement set pattern contains one or more of the following:
a first pattern, wherein the first pattern is used to indicate whether each second RS configuration belonging to the prediction set belongs to the measurement set;
a second pattern, wherein the second pattern is used to indicate an RS identification corresponding to an RS configuration belonging to the measurement set;
a third pattern, wherein the third pattern is used to indicate an arrangement rule of RS sequence numbers satisfied by RS configurations belonging to the measurement set;
a fourth pattern, wherein the fourth pattern is used to indicate a beam identification corresponding to an RS configuration belonging to the measurement set; or
a fifth pattern, wherein the fifth pattern is used to indicate an arrangement rule of beam sequence numbers satisfied by RS configurations belonging to the measurement set.

6. The method of claim 1 or 2, wherein the beam description information contains one or more of the following:
a beam identification;
an RS identification;
network device antenna configuration information;
beam angle information; or
beam width information.

7. The method of claim 1, wherein the first information is associated with one or more of an application scenario, a network device configuration, or a model function.

8. The method of any of claims 1 to 7, wherein after predicting the one or more target downlink beams, the method further comprises:
transmitting second information to the second communication device, wherein the second information contains one or more of the following:
a beam identification corresponding to the target downlink beam;
an RS identification corresponding to the target downlink beam;
an identification of the AI/ML model used to predict the target downlink beam;
identifications of datasets used to predict the target downlink beam;
identifications of RS configurations used to predict the target downlink beam;
an identification of beam description information used to predict the target downlink beam; or
information on a quantity of input beams and a quantity of output beams for the AI/ML model used to predict the target downlink beam.

9. A method for downlink beam prediction, performed by a second communication device, comprising:
determining first information, wherein the first information contains one or more of a dataset, a reference signal, RS, configuration, or beam description information, the first information is used to train or update an artificial intelligence, AI, or machine learning, ML, model, the AI/ML model is used to predict one or more target downlink beams, and the target downlink beams are used for information transmission between the second communication device and a first communication device; and
transmitting the first information to the first communication device.

10. The method of claim 9, wherein the dataset contains one or more of the following:
a dataset identification; or
one or more dataset samples, wherein the dataset samples contain multiple beam identifications, an RS measurement result of a beam corresponding to each beam identification, and one or more beam identifications as prediction labels.

11. The method of claim 9, wherein the RS configuration contains one or more of the following:
an RS configuration identification;
a first RS configuration belonging to a measurement set;
a second RS configuration belonging to a prediction set; or
a measurement set pattern, wherein the measurement set pattern is used to indicate a first RS configuration belonging to a measurement set;
wherein the first RS configuration is used to obtain RS measurement results as inputs of the model; and the second RS configuration is used to determine one or more downlink beams as prediction labels.

12. The method of claim 11, wherein the measurement set pattern contains one or more of the following:
a first pattern, wherein the first pattern is used to indicate whether each second RS configuration belonging to the prediction set belongs to the measurement set;
a second pattern, wherein the second pattern is used to indicate an RS identification corresponding to an RS configuration belonging to the measurement set;
a third pattern, wherein the third pattern is used to indicate an arrangement rule of RS sequence numbers satisfied by RS configurations belonging to the measurement set;
a fourth pattern, wherein the fourth pattern is used to indicate a beam identification corresponding to an RS configuration belonging to the measurement set; or
a fifth pattern, wherein the fifth pattern is used to indicate an arrangement rule of beam sequence numbers satisfied by RS configurations belonging to the measurement set.

13. The method of claim 9, wherein the beam description information contains one or more of the following:
a beam identification;
an RS identification;
network device antenna configuration information;
beam angle information; or
beam width information.

14. The method of any of claims 9 to 13, wherein the first information is associated with one or more of an application scenario, a network device configuration, or a model function.

15. The method of any of claims 9 to 14, further comprising:
receiving second information transmitted from the first communication device; and
determining the target downlink beam for information transmission with the first communication device based on the second information and a mapping relationship between a beam identification and a physical beam;
wherein the second information contains one or more of the following:
a beam identification corresponding to the target downlink beam;
an RS identification corresponding to the target downlink beam;
an identification of the AI/ML model used to predict the target downlink beam;
identifications of datasets used to predict the target downlink beam;
identifications of RS configurations used to predict the target downlink beam;
an identification of beam description information used to predict the target downlink beam; or
information on a quantity of input beams and a quantity of output beams for the AI/ML model used to predict the target downlink beam.

16. A method for downlink beam prediction, performed by a user equipment, UE, comprising:
receiving a reference signal, RS, configuration transmitted from a network device;
training or updating an artificial intelligence, AI, or machine learning, ML, model for downlink beam prediction based on the RS configuration; and
predicting one or more target downlink beams based on a trained or updated AI/ML model, wherein the target downlink beams are used for information transmission between the network device and the UE.

17. The method of claim 16, wherein the RS configuration contains an RS configuration identification, a second RS configuration belonging to a prediction set, and a measurement set pattern, wherein the measurement set pattern is used to indicate a first RS configuration belonging to a measurement set;
wherein the first RS configuration is used to obtain RS measurement results as inputs of the model; and the second RS configuration is used to determine one or more downlink beams as prediction labels.

18. The method of claim 17, wherein the measurement set pattern contains one or more of the following:
a first pattern, wherein the first pattern is used to indicate whether each second RS configuration belonging to the prediction set belongs to the measurement set;
a second pattern, wherein the second pattern is used to indicate an RS identification corresponding to an RS configuration belonging to the measurement set;
a third pattern, wherein the third pattern is used to indicate an arrangement rule of RS sequence numbers satisfied by RS configurations belonging to the measurement set;
a fourth pattern, wherein the fourth pattern is used to indicate a beam identification corresponding to an RS configuration belonging to the measurement set; or
a fifth pattern, wherein the fifth pattern is used to indicate an arrangement rule of beam sequence numbers satisfied by RS configurations belonging to the measurement set.

19. The method of any of claims 16 to 18, wherein after predicting the one or more target downlink beams, the method further comprises:
transmitting second information to the network device, wherein the second information contains one or more of the following:
a beam identification corresponding to the target downlink beam;
an RS identification corresponding to the target downlink beam;
an identification of the AI/ML model used to predict the target downlink beam;
identifications of RS configurations used to predict the target downlink beam; or
information on a quantity of input beams and a quantity of output beams for the AI/ML model used to predict the target downlink beam.

20. A method for downlink beam prediction, performed by a network device, comprising:
determining a reference signal, RS, configuration, wherein the RS configuration is used to train or update an artificial intelligence, AI, or machine learning, ML, model, the AI/ML model is used to predict one or more target downlink beams, and the target downlink beams are used for information transmission between the network device and a user equipment, UE; and
transmitting the RS configuration to the UE.

21. The method of claim 20, wherein the RS configuration contains an RS configuration identification, a second RS configuration belonging to a prediction set, and a measurement set pattern, wherein the measurement set pattern is used to indicate a first RS configuration belonging to a measurement set;
wherein the first RS configuration is used to obtain RS measurement results as inputs of the model; and the second RS configuration is used to determine one or more downlink beams as prediction labels.

22. The method of claim 21, wherein the measurement set pattern contains one or more of the following:
a first pattern, wherein the first pattern is used to indicate whether each second RS configuration belonging to the prediction set belongs to the measurement set;
a second pattern, wherein the second pattern is used to indicate an RS identification corresponding to an RS configuration belonging to the measurement set;
a third pattern, wherein the third pattern is used to indicate an arrangement rule of RS sequence numbers satisfied by RS configurations belonging to the measurement set;
a fourth pattern, wherein the fourth pattern is used to indicate a beam identification corresponding to an RS configuration belonging to the measurement set; or
a fifth pattern, wherein the fifth pattern is used to indicate an arrangement rule of beam sequence numbers satisfied by RS configurations belonging to the measurement set.

23. The method of any of claims 20 to 22, further comprising:
receiving second information transmitted from the UE; and
determining the target downlink beam for information transmission with the UE based on the second information and a mapping relationship between a beam identification and a physical beam;
wherein the second information contains one or more of the following:
a beam identification corresponding to the target downlink beam;
an RS identification corresponding to the target downlink beam;
an identification of the AI/ML model used to predict the target downlink beam;
identifications of RS configurations used to predict the target downlink beam; or
information on a quantity of input beams and a quantity of output beams for the AI/ML model used to predict the target downlink beam.

24. A first communication device, comprising a memory, a transceiver and a processor,
wherein the memory is used for storing a computer program, the transceiver is used for receiving and transmitting data under control of the processor and the processor is used for reading the computer program in the memory and performing the following operations:
receiving first information, wherein the first information contains one or more of a dataset, a reference signal, RS, configuration, or beam description information;
training or updating an artificial intelligence, AI, or machine learning, ML, model for downlink beam prediction based on the first information; and
predicting one or more target downlink beams based on a trained or updated AI/ML model, wherein the target downlink beams are used for information transmission between the first communication device and a second communication device.

25. The first communication device of claim 24, wherein receiving the first information contains:
receiving the first information transmitted from the second communication device.

26. The first communication device of claim 24 or 25, wherein the dataset contains one or more of the following:
a dataset identification; or
one or more dataset samples, wherein the dataset samples contain multiple beam identifications, an RS measurement result of a beam corresponding to each beam identification, and one or more beam identifications as prediction labels.

27. The first communication device of claim 24 or 25, wherein the RS configuration contains one or more of the following:
an RS configuration identification;
a first RS configuration belonging to a measurement set;
a second RS configuration belonging to a prediction set; or
a measurement set pattern, wherein the measurement set pattern is used to indicate a first RS configuration belonging to a measurement set;
wherein the first RS configuration is used to obtain RS measurement results as inputs of the model; and the second RS configuration is used to determine one or more downlink beams as prediction labels.

28. The first communication device of claim 27, wherein the measurement set pattern contains one or more of the following:
a first pattern, wherein the first pattern is used to indicate whether each second RS configuration belonging to the prediction set belongs to the measurement set;
a second pattern, wherein the second pattern is used to indicate an RS identification corresponding to an RS configuration belonging to the measurement set;
a third pattern, wherein the third pattern is used to indicate an arrangement rule of RS sequence numbers satisfied by RS configurations belonging to the measurement set;
a fourth pattern, wherein the fourth pattern is used to indicate a beam identification corresponding to an RS configuration belonging to the measurement set; or
a fifth pattern, wherein the fifth pattern is used to indicate an arrangement rule of beam sequence numbers satisfied by RS configurations belonging to the measurement set.

29. The first communication device of claim 24 or 25, wherein the beam description information contains one or more of the following:
a beam identification;
an RS identification;
network device antenna configuration information;
beam angle information; or
beam width information.

30. The first communication device of claim 24, wherein the first information is associated with one or more of an application scenario, a network device configuration, or a model function.

31. The first communication device of any of claims 24 to 30, wherein after predicting the one or more target downlink beams, the operations further comprise:
transmitting second information to the second communication device, wherein the second information contains one or more of the following:
a beam identification corresponding to the target downlink beam;
an RS identification corresponding to the target downlink beam;
an identification of the AI/ML model used to predict the target downlink beam;
identifications of datasets used to predict the target downlink beam;
identifications of RS configurations used to predict the target downlink beam;
an identification of beam description information used to predict the target downlink beam; or
information on a quantity of input beams and a quantity of output beams for the AI/ML model used to predict the target downlink beam.

32. A second communication device, comprising a memory, a transceiver and a processor,
wherein the memory is used for storing a computer program, the transceiver is used for receiving and transmitting data under control of the processor and the processor is used for reading the computer program in the memory and performing the following operations:
determining first information, wherein the first information contains one or more of a dataset, a reference signal, RS, configuration, or beam description information, the first information is used to train or update an artificial intelligence, AI, or machine learning, ML, model, the AI/ML model is used to predict one or more target downlink beams, and the target downlink beams are used for information transmission between the second communication device and a first communication device; and
transmitting the first information to the first communication device.

33. The second communication device of claim 32, wherein the dataset contains one or more of the following:
a dataset identification; or
one or more dataset samples, wherein the dataset samples contain multiple beam identifications, an RS measurement result of a beam corresponding to each beam identification, and one or more beam identifications as prediction labels.

34. The second communication device of claim 32, wherein the RS configuration contains one or more of the following:
an RS configuration identification;
a first RS configuration belonging to a measurement set;
a second RS configuration belonging to a prediction set; or
a measurement set pattern, wherein the measurement set pattern is used to indicate a first RS configuration belonging to a measurement set;
wherein the first RS configuration is used to obtain RS measurement results as inputs of the model; and the second RS configuration is used to determine one or more downlink beams as prediction labels.

35. The second communication device of claim 34, wherein the measurement set pattern contains one or more of the following:
a first pattern, wherein the first pattern is used to indicate whether each second RS configuration belonging to the prediction set belongs to the measurement set;
a second pattern, wherein the second pattern is used to indicate an RS identification corresponding to an RS configuration belonging to the measurement set;
a third pattern, wherein the third pattern is used to indicate an arrangement rule of RS sequence numbers satisfied by RS configurations belonging to the measurement set;
a fourth pattern, wherein the fourth pattern is used to indicate a beam identification corresponding to an RS configuration belonging to the measurement set; or
a fifth pattern, wherein the fifth pattern is used to indicate an arrangement rule of beam sequence numbers satisfied by RS configurations belonging to the measurement set.

36. The second communication device of claim 32, wherein the beam description information contains one or more of the following:
a beam identification;
an RS identification;
network device antenna configuration information;
beam angle information; or
beam width information.

37. The second communication device of any of claims 32 to 36, wherein the first information is associated with one or more of an application scenario, a network device configuration, or a model function.

38. The second communication device of any of claims 32 to 37, wherein the operations further comprise:
receiving second information transmitted from the first communication device; and
determining the target downlink beam for information transmission with the first communication device based on the second information and a mapping relationship between a beam identification and a physical beam;
wherein the second information contains one or more of the following:
a beam identification corresponding to the target downlink beam;
an RS identification corresponding to the target downlink beam;
an identification of the AI/ML model used to predict the target downlink beam;
identifications of datasets used to predict the target downlink beam;
identifications of RS configurations used to predict the target downlink beam;
an identification of beam description information used to predict the target downlink beam; or
information on a quantity of input beams and a quantity of output beams for the AI/ML model used to predict the target downlink beam.

39. A user equipment, UE, comprising a memory, a transceiver and a processor,
wherein the memory is used for storing a computer program, the transceiver is used for receiving and transmitting data under control of the processor and the processor is used for reading the computer program in the memory and performing the following operations:
receiving a reference signal, RS, configuration transmitted from a network device;
training or updating an artificial intelligence, AI, or machine learning, ML, model for downlink beam prediction based on the RS configuration; and
predicting one or more target downlink beams based on a trained or updated AI/ML model, wherein the target downlink beams are used for information transmission between the network device and the UE.

40. The UE of claim 39, wherein the RS configuration contains an RS configuration identification, a second RS configuration belonging to a prediction set, and a measurement set pattern, wherein the measurement set pattern is used to indicate a first RS configuration belonging to a measurement set;
wherein the first RS configuration is used to obtain RS measurement results as inputs of the model; and the second RS configuration is used to determine one or more downlink beams as prediction labels.

41. The UE of claim 40, wherein the measurement set pattern contains one or more of the following:
a first pattern, wherein the first pattern is used to indicate whether each second RS configuration belonging to the prediction set belongs to the measurement set;
a second pattern, wherein the second pattern is used to indicate an RS identification corresponding to an RS configuration belonging to the measurement set;
a third pattern, wherein the third pattern is used to indicate an arrangement rule of RS sequence numbers satisfied by RS configurations belonging to the measurement set;
a fourth pattern, wherein the fourth pattern is used to indicate a beam identification corresponding to an RS configuration belonging to the measurement set; or
a fifth pattern, wherein the fifth pattern is used to indicate an arrangement rule of beam sequence numbers satisfied by RS configurations belonging to the measurement set.

42. The UE of any of claims 39 to 41, wherein after predicting the one or more target downlink beams, the operations further comprise:
transmitting second information to the network device, wherein the second information contains one or more of the following:
a beam identification corresponding to the target downlink beam;
an RS identification corresponding to the target downlink beam;
an identification of the AI/ML model used to predict the target downlink beam;
identifications of RS configurations used to predict the target downlink beam; or
information on a quantity of input beams and a quantity of output beams for the AI/ML model used to predict the target downlink beam.

43. A network device, comprising a memory, a transceiver and a processor,
wherein the memory is used for storing a computer program, the transceiver is used for receiving and transmitting data under control of the processor and the processor is used for reading the computer program in the memory and performing the following operations:
determining a reference signal, RS, configuration, wherein the RS configuration is used to train or update an artificial intelligence, AI, or machine learning, ML, model, the AI/ML model is used to predict one or more target downlink beams, and the target downlink beams are used for information transmission between the network device and a user equipment, UE; and
transmitting the RS configuration to the UE.

44. The network device of claim 43, wherein the RS configuration contains an RS configuration identification, a second RS configuration belonging to a prediction set, and a measurement set pattern, wherein the measurement set pattern is used to indicate a first RS configuration belonging to a measurement set;
wherein the first RS configuration is used to obtain RS measurement results as inputs of the model; and the second RS configuration is used to determine one or more downlink beams as prediction labels.

45. The network device of claim 43, wherein the measurement set pattern contains one or more of the following:
a first pattern, wherein the first pattern is used to indicate whether each second RS configuration belonging to the prediction set belongs to the measurement set;
a second pattern, wherein the second pattern is used to indicate an RS identification corresponding to an RS configuration belonging to the measurement set;
a third pattern, wherein the third pattern is used to indicate an arrangement rule of RS sequence numbers satisfied by RS configurations belonging to the measurement set;
a fourth pattern, wherein the fourth pattern is used to indicate a beam identification corresponding to an RS configuration belonging to the measurement set; or
a fifth pattern, wherein the fifth pattern is used to indicate an arrangement rule of beam sequence numbers satisfied by RS configurations belonging to the measurement set.

46. The network device of any of claims 43 to 45, wherein the operations further comprise:
receiving second information transmitted from the UE; and
determining the target downlink beam for information transmission with the UE based on the second information and a mapping relationship between a beam identification and a physical beam;
wherein the second information contains one or more of the following:
a beam identification corresponding to the target downlink beam;
an RS identification corresponding to the target downlink beam;
an identification of the AI/ML model used to predict the target downlink beam;
identifications of RS configurations used to predict the target downlink beam; or
information on a quantity of input beams and a quantity of output beams for the AI/ML model used to predict the target downlink beam.

47. An apparatus for downlink beam prediction, for use in a first communication device, comprising:
a first receiving unit, used for receiving first information, wherein the first information contains one or more of a dataset, a reference signal, RS, configuration, or beam description information;
a first model unit, used for training or updating an artificial intelligence, AI, or machine learning, ML, model for downlink beam prediction based on the first information; and
a first predicting unit, used for predicting one or more target downlink beams based on a trained or updated AI/ML model, wherein the target downlink beams are used for information transmission between the first communication device and a second communication device.

48. The apparatus of claim 47, wherein receiving the first information contains:
receiving the first information transmitted from the second communication device.

49. The apparatus of claim 47 or 48, wherein the dataset contains one or more of the following:
a dataset identification; or
one or more dataset samples, wherein the dataset samples contain multiple beam identifications, an RS measurement result of a beam corresponding to each beam identification, and one or more beam identifications as prediction labels.

50. The apparatus of claim 47 or 48, wherein the RS configuration contains one or more of the following:
an RS configuration identification;
a first RS configuration belonging to a measurement set;
a second RS configuration belonging to a prediction set; or
a measurement set pattern, wherein the measurement set pattern is used to indicate a first RS configuration belonging to a measurement set;
wherein the first RS configuration is used to obtain RS measurement results as inputs of the model; and the second RS configuration is used to determine one or more downlink beams as prediction labels.

51. The apparatus of claim 50, wherein the measurement set pattern contains one or more of the following:
a first pattern, wherein the first pattern is used to indicate whether each second RS configuration belonging to the prediction set belongs to the measurement set;
a second pattern, wherein the second pattern is used to indicate an RS identification corresponding to an RS configuration belonging to the measurement set;
a third pattern, wherein the third pattern is used to indicate an arrangement rule of RS sequence numbers satisfied by RS configurations belonging to the measurement set;
a fourth pattern, wherein the fourth pattern is used to indicate a beam identification corresponding to an RS configuration belonging to the measurement set; or
a fifth pattern, wherein the fifth pattern is used to indicate an arrangement rule of beam sequence numbers satisfied by RS configurations belonging to the measurement set.

52. The apparatus of claim 47 or 48, wherein the beam description information contains one or more of the following:
a beam identification;
an RS identification;
network device antenna configuration information;
beam angle information; or
beam width information.

53. The apparatus of claim 47, wherein the first information is associated with one or more of an application scenario, a network device configuration, or a model function.

54. The apparatus of any of claims 47 to 53, wherein after predicting the one or more target downlink beams, the apparatus further comprises:
a first transmitting unit, used for transmitting second information to the second communication device, wherein the second information contains one or more of the following:
a beam identification corresponding to the target downlink beam;
an RS identification corresponding to the target downlink beam;
an identification of the AI/ML model used to predict the target downlink beam;
identifications of datasets used to predict the target downlink beam;
identifications of RS configurations used to predict the target downlink beam;
an identification of beam description information used to predict the target downlink beam; or
information on a quantity of input beams and a quantity of output beams for the AI/ML model used to predict the target downlink beam.

55. An apparatus for downlink beam prediction, for use in a second communication device, comprising:
a first determining unit, used for determining first information, wherein the first information contains one or more of a dataset, a reference signal, RS, configuration, or beam description information, the first information is used to train or update an artificial intelligence, AI, or machine learning, ML, model, the AI/ML model is used to predict one or more target downlink beams, and the target downlink beams are used for information transmission between the second communication device and a first communication device; and
a second transmitting unit, used for transmitting the first information to the first communication device.

56. The apparatus of claim 55, wherein the dataset contains one or more of the following:
a dataset identification; or
one or more dataset samples, wherein the dataset samples contain multiple beam identifications, an RS measurement result of a beam corresponding to each beam identification, and one or more beam identifications as prediction labels.

57. The apparatus of claim 55, wherein the RS configuration contains one or more of the following:
an RS configuration identification;
a first RS configuration belonging to a measurement set;
a second RS configuration belonging to a prediction set; or
a measurement set pattern, wherein the measurement set pattern is used to indicate a first RS configuration belonging to a measurement set;
wherein the first RS configuration is used to obtain RS measurement results as inputs of the model; and the second RS configuration is used to determine one or more downlink beams as prediction labels.

58. The apparatus of claim 57, wherein the measurement set pattern contains one or more of the following:
a first pattern, wherein the first pattern is used to indicate whether each second RS configuration belonging to the prediction set belongs to the measurement set;
a second pattern, wherein the second pattern is used to indicate an RS identification corresponding to an RS configuration belonging to the measurement set;
a third pattern, wherein the third pattern is used to indicate an arrangement rule of RS sequence numbers satisfied by RS configurations belonging to the measurement set;
a fourth pattern, wherein the fourth pattern is used to indicate a beam identification corresponding to an RS configuration belonging to the measurement set; or
a fifth pattern, wherein the fifth pattern is used to indicate an arrangement rule of beam sequence numbers satisfied by RS configurations belonging to the measurement set.

59. The apparatus of claim 55, wherein the beam description information contains one or more of the following:
a beam identification;
an RS identification;
network device antenna configuration information;
beam angle information; or
beam width information.

60. The apparatus of any of claims 55 to 59, wherein the first information is associated with one or more of an application scenario, a network device configuration, or a model function.

61. The apparatus of any of claims 55 to 60, further comprising:
a second receiving unit, used for receiving second information transmitted from the first communication device; and
determining the target downlink beam for information transmission with the first communication device based on the second information and a mapping relationship between a beam identification and a physical beam;
wherein the second information contains one or more of the following:
a beam identification corresponding to the target downlink beam;
an RS identification corresponding to the target downlink beam;
an identification of the AI/ML model used to predict the target downlink beam;
identifications of datasets used to predict the target downlink beam;
identifications of RS configurations used to predict the target downlink beam;
an identification of beam description information used to predict the target downlink beam; or
information on a quantity of input beams and a quantity of output beams for the AI/ML model used to predict the target downlink beam.

62. An apparatus for downlink beam prediction, for use in a user equipment, UE, comprising:
a third receiving unit, used for receiving a reference signal, RS, configuration transmitted from a network device;
a second model unit, used for training or updating an artificial intelligence, AI, or machine learning, ML, model for downlink beam prediction based on the RS configuration; and
a second predicting unit, used for predicting one or more target downlink beams based on a trained or updated AI/ML model, wherein the target downlink beams are used for information transmission between the network device and the UE.

63. The apparatus of claim 62, wherein the RS configuration contains an RS configuration identification, a second RS configuration belonging to a prediction set, and a measurement set pattern, wherein the measurement set pattern is used to indicate a first RS configuration belonging to a measurement set;
wherein the first RS configuration is used to obtain RS measurement results as inputs of the model; and the second RS configuration is used to determine one or more downlink beams as prediction labels.

64. The apparatus of claim 63, wherein the measurement set pattern contains one or more of the following:
a first pattern, wherein the first pattern is used to indicate whether each second RS configuration belonging to the prediction set belongs to the measurement set;
a second pattern, wherein the second pattern is used to indicate an RS identification corresponding to an RS configuration belonging to the measurement set;
a third pattern, wherein the third pattern is used to indicate an arrangement rule of RS sequence numbers satisfied by RS configurations belonging to the measurement set;
a fourth pattern, wherein the fourth pattern is used to indicate a beam identification corresponding to an RS configuration belonging to the measurement set; or
a fifth pattern, wherein the fifth pattern is used to indicate an arrangement rule of beam sequence numbers satisfied by RS configurations belonging to the measurement set.

65. The apparatus of any of claims 62 to 64, wherein after predicting the one or more target downlink beams, the apparatus further comprises:
a third transmitting unit, used for transmitting second information to the network device, wherein the second information contains one or more of the following:
a beam identification corresponding to the target downlink beam;
an RS identification corresponding to the target downlink beam;
an identification of the AI/ML model used to predict the target downlink beam;
identifications of RS configurations used to predict the target downlink beam; or
information on a quantity of input beams and a quantity of output beams for the AI/ML model used to predict the target downlink beam.

66. An apparatus for downlink beam prediction, for use in a network device, comprising:
a second determining unit, used for determining a reference signal, RS, configuration, wherein the RS configuration is used to train or update an artificial intelligence, AI, or machine learning, ML, model, the AI/ML model is used to predict one or more target downlink beams, and the target downlink beams are used for information transmission between the network device and a user equipment, UE; and
a fourth transmitting unit, used for transmitting the RS configuration to the UE.

67. The apparatus of claim 66, wherein the RS configuration contains an RS configuration identification, a second RS configuration belonging to a prediction set, and a measurement set pattern, wherein the measurement set pattern is used to indicate a first RS configuration belonging to a measurement set;
wherein the first RS configuration is used to obtain RS measurement results as inputs of the model; and the second RS configuration is used to determine one or more downlink beams as prediction labels.

68. The apparatus of claim 67, wherein the measurement set pattern contains one or more of the following:
a first pattern, wherein the first pattern is used to indicate whether each second RS configuration belonging to the prediction set belongs to the measurement set;
a second pattern, wherein the second pattern is used to indicate an RS identification corresponding to an RS configuration belonging to the measurement set;
a third pattern, wherein the third pattern is used to indicate an arrangement rule of RS sequence numbers satisfied by RS configurations belonging to the measurement set;
a fourth pattern, wherein the fourth pattern is used to indicate a beam identification corresponding to an RS configuration belonging to the measurement set; or
a fifth pattern, wherein the fifth pattern is used to indicate an arrangement rule of beam sequence numbers satisfied by RS configurations belonging to the measurement set.

69. The apparatus of any of claims 66 to 68, further comprising:
a fourth receiving unit, used for receiving second information transmitted from the UE; and
determining the target downlink beam for information transmission with the UE based on the second information and a mapping relationship between a beam identification and a physical beam;
wherein the second information contains one or more of the following:
a beam identification corresponding to the target downlink beam;
an RS identification corresponding to the target downlink beam;
an identification of the AI/ML model used to predict the target downlink beam;
identifications of RS configurations used to predict the target downlink beam; or
information on a quantity of input beams and a quantity of output beams for the AI/ML model used to predict the target downlink beam.

70. A computer-readable storage medium, wherein the computer-readable storage medium stores a computer program and the computer program is used to cause a computer to perform the method of any of claims 1 to 8, or perform the method of any of claims 9 to 15, or perform the method of any of claims 16 to 19, or perform the method of any of claims 20 to 23.
